# EUROPEAN PATENT APPLICATION

(11) **EP 4 644 463 A1**
(43) Date of publication of application: **05.11.2025**
(21) Application number: 24749684.7
(22) Date of filing: 30.01.2024
(51) Int. Cl.: C08G 69/02, C09B 1/00, D06P 1/00, D06P 3/24

(54) **COLORED NYLON AND PREPARATION METHOD THEREFOR AND APPLICATION THEREOF**

(30) Priority: 31.01.2023 CN 202310118815; 23.01.2024 CN 202410096657
(71) Applicant: China Petroleum & Chemical Corporation, Beijing 100728 (CN)
(72) Inventor: WANG, Hui, Beijing 100728 (CN); ZHANG, Xiaohui, Beijing 100728 (CN); YANG, Changan, Yueyang, Hunan 414000 (CN); QIAO, Rong, Beijing 100728 (CN); HUANG, Yang, Beijing 100728 (CN); HU, Jue, Beijing 100728 (CN)
(74) Representative: karo IP
(86) International application number: PCT/CN2024/074751
(87) International publication number: WO 2024/160205

(57) **Abstract**

The present invention relates to a colored nylon preparation technology, and disclosed are colored nylon and a preparation method therefor and an application thereof. The colored nylon comprises nylon structure units and chromogenic structure units. The chromogenic structure units comprise dye chromogenic groups. The chromaticity of a supernatant obtained by steaming a mixture of the colored nylon and an organic solvent in a weight ratio of 1:3 does not exceed 10, and the difference in color depth of the colored nylon does not exceed 0.2. The preparation method for the colored nylon comprises: enabling a condensate containing the dye chromogenic groups to be in contact with a nylon monomer for a condensation reaction, so that at least some of the dye chromogenic groups are located between and/or at the ends of the structure units formed from the nylon unit. The colored nylon provided by the present invention has excellent water resistance and organic solvent resistance, high dyeing uniformity and good dyeing stability, low energy consumption and little pollution in the preparation process, and good economic and social benefits.

## Description

### CROSS-REFERENCE TO RELATED APPLICATIONS

The application claims the benefit of the China patent application No. "202310118815.9" filed on January 31, 2023 and the China patent application No. "202410096657.6" filed on January 23, 2024, the contents of which are specifically and entirely incorporated herein by reference.

### TECHNICAL FIELD

The present invention relates to the nylon synthesis technology, in particular to a colored nylon and a preparation method therefor and an application thereof.

### BACKGROUND ART

Nylon pertains to the polyamide product and has the characteristics such as high tensile strength, high elasticity modulus, excellent abrasion resistance and self-lubrication, thus nylon has been widely applied in the automobile manufacturing, electronic appliance, mechanical equipment, packaging and other industries; due to its strong vitality, nylon has emerged as the second largest chemical fiber after polyester.

Nylon includes aliphatic nylon, aliphatic-aromatic nylon and aromatic nylon. Among them, the aliphatic nylon has excellent toughness, self-lubrication, abrasion resistance, chemical resistance, gas permeability and oil resistance, and has been widely applied in the fields such as textile industry, industrial fibers, daily use engineering materials; the aromatic nylon has desirable mechanical properties, insulation, chemical stability and ultra-high thermal properties due to the aryl groups in the molecular chain, and is mainly used in the aerospace, atomic energy, electronic and electrical industries at present.

Nylon matrix needs to be dyed into different colours depending on the application scenarios to meet the different product needs. The traditional dyeing modes of nylon are mainly composed of dip dyeing and dope dyeing, wherein the dip dyeing is typically a high temperature dyeing process by mixing a nylon matrix with an acid dye; the dope dyeing is carried out by adding appropriate colorants into a spinning solution, sufficiently mixing the materials, dissolving and filtering, or injecting the colorant or coloured stoste before entering the nylon matrix into the spinneret. However, the dyeing effect of dip dyeing and dope dyeing is mainly achieved through the physical forces such as hydrogen bond, coulomb force and Van der Waals force between the dye and said nylon matrix, it is difficult to control the uniformity of dyeing, and the stability is poor, in particular, the discoloration and color fading are prone to occur in organic solvents.

There are methods known in the prior art to introduce the dye group in the form of a chemical bond into the nylon, for example, CN112457486A discloses a synthesis method comprises: polymerizing a polyamide monomer in the presence of the light absorber to produce the polyamide having the light absorber in the main chain of the polyamide, and the light absorber is selected from a polyamine light absorber, a polyacid light absorber, an amino acid light absorber, and any combination thereof. However, the copolymerization process of directly adding a dye into the nylon system suffers from the obvious defects, such as incomplete reaction of said dye, poor water resistance of dyed nylon, and uneven dyeing.

### SUMMARY OF THE INVENTION

The present invention aims to provide a colored nylon and a preparation method therefor and an application thereof, in order to overcome the defects in the prior art, such as poor physical dyeing stability, low reaction efficiency of chemical dyeing, uneven dyeing and serious pollution.

The first aspect of the present invention provides a colored nylon comprising nylon structure units and chromogenic structure units, the chromogenic structure units comprise dye chromogenic groups; the chromaticity of a supernatant obtained by steaming a mixture of the colored nylon and an organic solvent in a weight ratio of 1:3 does not exceed 10, and the difference in color depth of the colored nylon does not exceed 0.2.

The second aspect of the present invention provides a preparation method for the colored nylon, the method comprises: contacting a condensate containing the dye chromogenic groups with a nylon monomer to carry out the condensation reaction, such that at least a part of the dye chromogenic groups are located between and/or at the ends of the structure units formed from the nylon unit.

The third aspect of the present invention provides a colored nylon produced with the aforementioned preparation method.

The fourth aspect of the present invention provides an application of the colored nylon in at least one of textile, industrial fibres and engineering materials.

Due to the technical scheme, the colored nylon provided by the present invention does not have a discoloration phenomenon after steaming in an organic solvent, and exhibits excellent dyeing stability and color fastness; the colored nylon has excellent dyeing uniformity, a difference in color depth does not exceed 0.2, and desirable water resistance.

The preparation method for the colored nylon provided by the present invention is based on contacting the dye chromogenic groups in a form of condensate with nylon or a nylon monomer, which on the one hand, can solve the problem in the prior art in regard to the lower reactivity and utilization rate of dye resulting from the significantly lower reactivity ratio of the amine dye in the polycondensation process of the amine dye with diamine and diacid or diacid halide than the diamine used for preparing nylon, and on the other hand, can enable the dye to be uniformly dispersed and strongly bonded. In addition, since the dye-containing polycondensates are prone to separate from the dye, full amount of dye utilization can be achieved, the dye-containing waste water does not generate in the subsequent processes. The colored nylon produced with the method of the present invention has a high dyeing uniformity, desirable stability and high color fastness, and can withstand steaming of an organic solvent without discoloration. Further, the product obtained by the condensation reaction in the preparation process can be directly cooled and subjected to nylon processing, thereby effectively reducing the subsequent treatment process, avoiding the generation of dye-containing wastewater, reducing energy consumption, water consumption and chemical consumption as well as chemical oxygen demand (COD) emission, thus the preparation process is environmentally friendly, exhibits a shorter process flow, and effectively improves the economic and social benefits of the colored nylon production.

The other characteristics and advantages of the present invention will be described in details in the subsequent description of the preferred embodiment.

### BRIEF DESCRIPTION OF THE DRAWINGS

FIG. 1 illustrate an infrared spectrogram of a dye monomer, a dibasic acid, and a dye condensate 1-1 in Preparation Example 1;
FIG. 2 illustrate an infrared spectrogram of the dye condensate 1-1, caprolactam and colored nylon in Example 1;
FIG. 3 shows the comparison diagrams of the black nylon-6 polymer slices prepared in Example 31 before and after steaming with ethyl acetate, wherein FIG. 3a and FIG. 3b illustrate the black nylon-6 polymer slices before and after steaming, respectively;
FIG. 4 shows the comparison diagrams of the black nylon-6 prepared in Comparative Example 12 before and after steaming with ethyl acetate, wherein FIG. 4a and FIG. 4b illustrate the black nylon-6 before and after steaming, respectively;
FIG. 5 illustrates the ¹H NMR spectrogram of the condensate 2-1 obtained in Preparation Example 15;
FIG. 6 illustrates an infrared spectrogram of the condensate 2-1 obtained in Preparation Example 15;
FIG. 7 illustrates the ¹H NMR spectrogram of the condensate 2-3 obtained in Preparation Example 17;
FIG. 8 illustrates an infrared spectrogram of the condensate 2-3 obtained in Preparation Example 17;
FIG. 9 illustrates the ¹H NMR spectrogram of the condensate 2-7 obtained in Preparation Example 21;
FIG. 10 illustrates an infrared spectrogram of the condensate 2-7 obtained in Preparation Example 21;
FIG. 11 illustrates an infrared spectrogram of the yellow nylon-6 polymer prepared in Example 25;
FIG. 12 illustrates an infrared spectrogram of the black nylon-6 polymer prepared in Example 31;
FIG. 13 illustrates an infrared spectrogram of the brown nylon-6 polymer prepared in Example 44;
FIG. 14 illustrates the ¹H NMR spectrogram of the condensate, the dye monomer and the dibasic acid obtained in Preparation Example 2;
FIG. 15 illustrates a liquid chromatogram of the condensate, the dye monomer and the dibasic acid obtained in Preparation Example 2.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a colored nylon comprising nylon structure units and chromogenic structure units, the chromogenic structure units comprise dye chromogenic groups; the chromaticity of a supernatant obtained by steaming a mixture of the colored nylon and an organic solvent in a weight ratio of 1:3 does not exceed 10, and the difference in color depth of the colored nylon does not exceed 0.2.

The colored nylon according to the present invention has a stable color fastness without discoloration after steaming in an organic solvent (e.g. ethyl acetate, ethanol, methanol, acetone). By performing the chromaticity test on the supernatant obtained after steaming with an organic solvent through the dilution multiplier method, it can be found that the chromaticity of a supernatant obtained after steaming does not exceed 10, it demonstrates that the colored nylon provided by the present invention can resist steaming with an organic solvent, and exhibits remarkably excellent dyeing stability and color fastness. In addition, the difference in color depth of the colored nylon does not exceed 0.2, such that the colored nylon has excellent dyeing uniformity and desirable water resistance.

In order to solve the existing problems in the prior art, the present inventors have discovered through the extensive and in-depth studies that, by contacting the dye chromogenic groups in the form of condensate with nylon or a nylon monomer, participating in a nylon polymerization system, achieving a high reactivity ratio between the dye chromogenic groups and nylon monomer by means of oligomer, introducing the dye chromogenic groups into the nylon chain segments efficiently and uniformly, such that the produced colored nylon has a high dyeing uniformity, desirable stability and high color fastness, on the basis of maintaining the excellent mechanical properties of the nylon product, the colored nylon can resist steaming with an organic solvent and is not decolorized, thus the colored nylon obtains excellent water resistance and dyeing uniformity.

In the invention, the test process of steaming a mixture of colored nylon and an organic solvent is as follows: mixing colored nylon with ethyl acetate in a weight ratio 1:3, then refluxing and steaming at 77°C for 24h, filtering off the solid material colored nylon contained therein, and measuring the chromaticity of ethyl acetate supernatant after steaming according to the standard HJ 1182-2021 "Water quality - Determination of colority - Dilution level method", the chromaticity is expressed as a dilution multiplier value.

In order to compare and analyze the dyeing uniformity difference of the colored nylon provided by the invention and that of the prior art, the color uniformity effects of the colored nylon are characterized by using the standard deviation ΔK/S of the ratio K/S of the colorant absorption coefficient K to the colorant scattering coefficient S of the plurality of test points (i.e., the difference in color depth Sr). The specific test process is as follows: measuring the K/S values of the various locations of the nylon slices on the Datacolor 850 type color measuring and matching instrument (each slice location is measured by using 8 measurement points taken along two diagonal lines and two long sides). The standard deviation of K/S values obtained from the calculation based on the sample data of K/S values is exactly the difference in color depth (denoted by Sr).

In the invention, the process for measuring the content of halogen ions in a boiling solution obtained by steaming a mixture of the colored nylon and deionized water in a weight ratio of 1:1 is as follows: mixing colored nylon with deionized water in weight ratio 1:1, then steaming the mixture at 90-110°C for 3-6h to obtain a boiling solution, sampling the boiling solution and measuring the concentration of free halogen ions by using the ion chromatography; it shall be noted that the preparation process of colored nylon provided by the invention does not involve with an use of the substrate of acyl chlorides and halides, the colored nylon does not contain a residual halogen ion, the halogen ion is not present in the boiling solution after mixing the colored nylon with deionized water at any temperature and steaming the mixture for any time. Further preferably, the content of halogen ions in a boiling solution obtained by steaming a mixture of the colored nylon and deionized water in a weight ratio of 1:1 does not exceed 5ppm.

In the present invention, the colour fastness to water immersion of colored nylon is measured according to the international standard ISO 105-E01, and the colour fastness to water immersion of the colored nylon is level 4-5. As can be seen, the colored nylon provided by the invention has excellent water resistance.

In the present invention, the colour fastness to perspiration of the colored nylon is measured according to the international standard ISO 105-E04, the colour fastness to soap washing of the colored nylon is measured according to the international standard ISO 105-C10, the colored nylon has a colour fastness to perspiration being level 4-5, and a colour fastness to soap washing being level 4-5. As can be seen, the colored nylon provided by the invention not only enhances the dye uniformity and water resistance, but also enables that the colored nylon has excellent perspiration resistance and soap washing resistance.

It is understandable in the invention that the colored nylon includes dye chromogenic groups to provide nylon with the desired color, the dye chromogenic groups contained in the colored nylon can be determined by the nuclear magnetic resonance spectrum and infrared spectrum detection. For example, when the dye chromogenic groups are anthraquinone groups, the infrared spectrum of said nylon product illustrates the stretching vibration peak of the group =C-H (corresponding to the group =C-H in the anthraquinone structure) at the vicinity of 3085cm⁻¹ and the stretching vibration peak of benzene nucleus skeleton (corresponding to the benzene nucleus skeleton in the anthraquinone structure) at the vicinity of 1553cm⁻¹; when the dye chromogenic groups are acidic black groups, the infrared spectrum of said nylon product illustrates characteristic peaks of the carbon-nitrogen double bond at the vicinity of 1588cm⁻¹ and characteristic peaks of the cyclohexadienyl group near 1487-1460cm⁻¹. In a case of preferably, the dye chromogenic groups are at least one selected from the group consisting of anthraquinone-chromogenic groups, solvent black groups, acid black groups, acid blue groups and acid yellow groups.

In the invention, the contents of nylon structure units and chromogenic structure units in the colored nylon may be determined by nuclear magnetic resonance spectrum and infrared spectrum detection. Further preferably, the chromogenic structures units are contained in an amount of 0.2-1.5wt%, based on the weight of said colored nylon.

The second aspect of the present invention provides a preparation method for the colored nylon, the method comprises: contacting a condensate containing the dye chromogenic groups with a nylon monomer to carry out the condensation reaction, such that at least a part of the dye chromogenic groups are located between and/or at the ends of the structure units formed from the nylon unit.

The preparation method for the colored nylon provided by the invention is based on contacting dye chromogenic groups in the form of condensate with a nylon monomer, participating in the nylon polymerization system, using the condensate for achieving the high reactivity ratio effects between the dye chromogenic groups and the nylon monomer, such an arrangement can on the one hand efficiently introduces the dye chromogenic groups into the nylon chain segment, increases reactivity and utilization rate of dye, on the other hand, it enables that the dye is uniformly dispersed and firmly bonded in the nylon chain segment, so that the colored nylon has a high dyeing uniformity (the difference in color depth does not exceed 0.2), desirable dyeing stability and high color fastness, can resist steaming with an organic solvent without the discoloration, thus the colored nylon exhibits excellent water resistance.

The preparation method provided by the invention is capable of efficiently polymerizing the dye chromogenic groups and nylon monomer so that the impurities such as unreacted dye chromogenic group-containing condensate in the product obtained from the condensation reaction are extremely low, and the product obtained from the condensation reaction can be cooled and then directly subjected to subsequent processing (e.g., slicing). Therefore, the preparation method is capable of effectively reducing the subsequent treatment process, avoiding the formation of dye-containing wastewater, thereby reducing energy consumption, water consumption and chemical consumption as well as chemical oxygen demand (COD) emission, thus the preparation process is environmentally friendly, has a shorter process flow and desirable economic and social benefits.

According to the present invention, the condensate containing dye chromogenic groups may be connected with the nylon chain segment by any form of chemical linking bond to form a nylon polymer incorporating dye chromogenic groups, preferably, wherein the nylon monomer in the polymer is connected with the condensate containing dye chromogenic groups through an amide bond. In the case of preferably, the block stability of the dye chromogenic groups in the nylon chain segment is further enhanced, thereby improving the dyeing stability of the colored nylon.

In the invention, the dye chromogenic groups may be at least one selected from the group consisting of anthraquinone-chromogenic groups, solvent black groups, acid black groups, acid blue groups and acid yellow groups.

As an embodiment of the invention, the condensate containing dye chromogenic groups has a structure represented by formula (I), 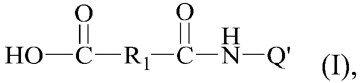 wherein R₁ is aliphatic alkylidene or aromatic alkylidene, and Q' is the dye chromogenic group. In the invention, R₁ may be any aliphatic alkylidene, for example, methylidene, ethylidene, propylidene, butylidene, pentylidene, hexylidene, heptylidene, octylidene, nonylidene, decylidene, undecylidene, dodecylidene; or any aromatic alkylidene, such as terephthalylidene, o-phthalylidene, m-phthalylidene, 1,3-naphthalene dimethylidene, 1,4-naphthalene dimethylidene, 1,5-naphthalene dimethylidene, 1,7-naphthalene dimethylidene, 2,6-naphthalene dimethylidene, 2,7-naphthalene dimethylidene; preferably, R₁ is C₂-C₁₆ aliphatic alkylidene or C₈-C₁₄ aromatic alkylidene. The inventors have found that in the preferred embodiment, the nylon product has higher dyeing uniformity and better dyeing stability.

As a preferred embodiment of the dye chromogenic groups, the structural formula of the dye chromogenic groups is at least one selected from formula (II), formula (III) and formula (IV),

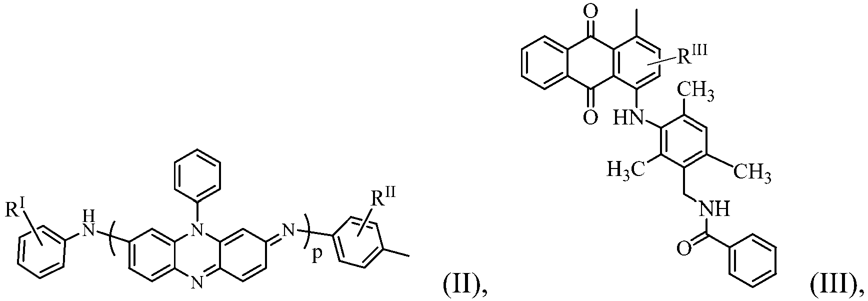

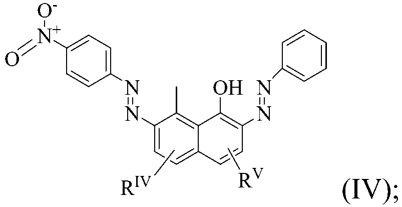

Wherein R^{I}, R^{II}, R^{III}, R^{IV} and R^{V} are each independently hydrogen and/or a water soluble group, and p is an integer from 1 to 10. The inventors have discovered that in the preferred embodiment, the nylon product has a higher dyeing uniformity and a better dyeing stability.

In the present invention, the water soluble group may be any hydrophilic or water-soluble substituent; preferably, the water soluble group is -(CR^{VI}R^{VII})_{m'}-SO₃M, R^{VI} and R^{VII} are each independently selected from at least one of hydrogen and C₁-C₅ alkyl (e.g., methyl, ethyl, n-propyl, isopropyl, n-butyl, isobutyl, sec-butyl, tert-butyl), M is monovalent metal ion and/or ammonium ion, preferably an alkali metal ion, further preferably Li⁺, Na⁺, or K⁺; and m' is an integer from 0 to 4. The inventors have found that the preferred embodiment can further improve the dyeing uniformity and stability of the colored nylon.

As another preferred embodiment of the dye chromogenic groups, the dye chromogenic groups are unsubstituted or substituted anthraquinone groups represented by formula (V),

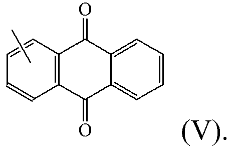

Wherein the substituent of the anthraquinone group represented by formula(V) is a substituent without containing a terminal amino group, it may be at least one selected from the group consisting of -NO₂, -Cl, -Br -OH -OCH₃, -CH₃, -OCH₃, -SO₃H, -CN, -SO₃Na, -NH-CH₃, 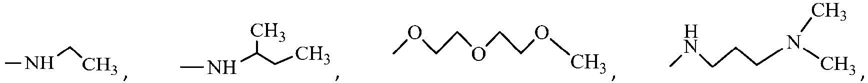 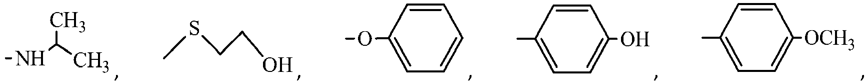 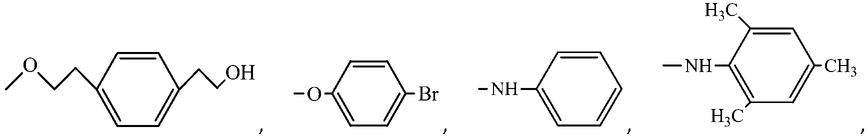 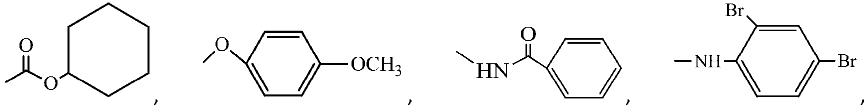 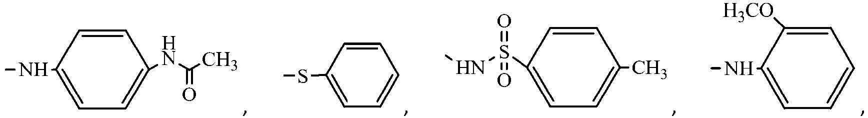 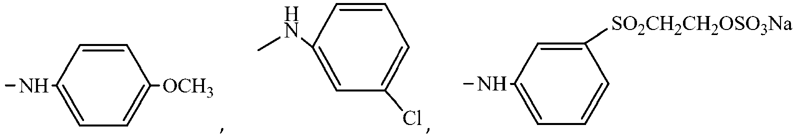 and 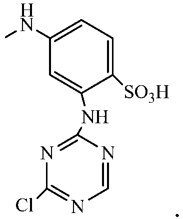 The inventors have discovered that the preferred embodiment can further improve the dyeing uniformity and stability of the colored nylon.

In this circumstance, the dye monomers providing dye chromogenic groups are at least one selected from the group consisting of 1-amino-2,4-dibromoanthraquinone, 1-amino-2-bromo-4-hydroxyanthraquinone, 2-amino-3-hydroxyanthraquinone, 2-amino-1-chloroanthraquinone, 1-amino-2-(4-bromophenoxy)-4-hydroxyanthraquinone, 1-amino-4-phenylamino-2-bromoanthraquinone, 1-amino-5-hydroxy-4-[(1-methylpropyl)amino]-8-nitro-9,10-anthraquinone, acid blue 129, acid blue 25, C.I. disperse red 60, disperse blue 359, 1-amino-4-nitroanthraquinone-2-carboxylic acid cyclohexyl ester, disperse violet No. 4, 1-amino-5-benzamidoanthraquinone, 1-aminoanthraquinone, 2-aminoanthraquinone, 1-amino-4-hydroxyanthraquinone, acid blue 40, 2-chloro-4-hydroxy-1-aminoanthraquinone, 1-bromo-3-chloro-2-aminoanthraquinone, 1-amino-4-bromo-2-methylanthraquinone, disperse violet 15, 1-amino-4-hydroxy-2-(phenylthio)anthraquinone, 1-amino-9,10-dihydro-4-[[(4-tolyl)sulfonyl]amino]-anthraquinone-2-sulf onic acid, C.I. active blue 19, 1-amino-4-[(2-methoxyphenyl)amino] anthraquinone, 1-amino-5-hydroxy-4-[(4-methoxyphenyl)amino]-8-nitroanthraquinone, sodium 1-amino-4-bromoanthraquinone-2-sulfonate, 1-amino-4-bromoanthraquinone-2-sulfonic acid, 1-amino-2-bromo-4-[[3-(dimethylamino)propyl]amino]anthraquinone, 1-amino-4-hydroxy-2-[2-[4-(2-hydroxyethyl)phenyl]ethoxy] anthraquinone, 1-amino-4-bromoanthraquinone, 1-amino-4-hydroxy-2-(4-methoxyphenoxy)anthraquinone, disperse red 86, disperse red 53, 2-amino-3-hydroxyanthraquinone, disperse orange 11, 1-amino-5-[(2,4-dibromophenyl)amino]-4,8-dihydroxyanthraquinone, 1-amino-4,5-dihydroxy-8-(methylamino)anthraquinone, reactive blue 4, 1-amino-4-hydroxy-2-[(2-hydroxyethyl)thio]anthraquinone, 1-amino-5-chloroanthraquinone, 1-amino-2-bromo-4-(3-chloroaniline)anthraquinone, disperse red E-4B and 2-amino-3-chloroanthraquinone.

As another embodiment of the invention, it is preferable that the condensate containing the dye chromogenic groups comprises two terminal amino groups or two terminal carboxyl groups and has a structure unit a represented by formula(VI), 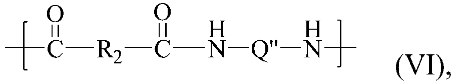 wherein R₂ is aliphatic alkylidene or aromatic alkylidene, and Q" is the dye chromogenic group.

In the present invention, R₂ may be any aliphatic alkylidene, for example, methylidene, ethylidene, propylidene, butylidene, pentylidene, hexylidene, heptylidene, octylidene, nonylidene, decylidene, undecylidene, dodecylidene; or any aromatic alkylidene, such as terephthalylidene, o-phthalylidene, m-phthalylidene, 1,3-naphthalene dimethylidene, 1,4-naphthalene dimethylidene, 1,5-naphthalene dimethylidene, 1,7-naphthalene dimethylidene, 2,6-naphthalene dimethylidene, 2,7-naphthalene dimethylidene; preferably, R₂ is C₂-C₁₆ aliphatic alkylidene or C₈-C₁₄ aromatic alkylidene, more preferably C₈-C₁₄ aromatic alkylidene. The inventors have found that in the preferred embodiment, the nylon product has higher dyeing uniformity and better dyeing stability.

According to the invention, the dye chromogenic group is preferably unsubstituted or substituted group represented by formula(VII), or unsubstituted or substituted group represented by formula(VIII),

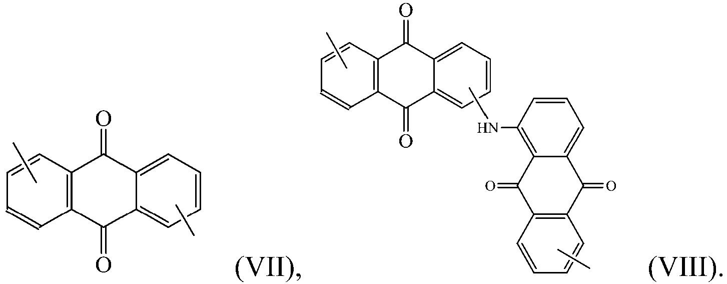

Wherein the substituent of the group represented by formula (VII) and the substituent of the group represented by formula (VIII) are each independently a substituent that does not contain a terminal amino group, and may be selected from the same substituent groups as the anthraquinone group represented by formula (V).

Exemplarily, the dye monomers providing the dye chromogenic groups are at least one selected from the group consisting of 1,4-diaminoanthraquinone, 2,6-diaminoanthraquinone, 1,2-diaminoanthraquinone, 1,5-diaminoanthraquinone, 1,8-diaminoanthraquinone, 1,4-diamino-2,3-dichloroanthraquinone, 1,4-diamino-2,3-dihydroxyanthraquinone, disperse red 11, solvent violet 59, 1,5-diamino-4,8-dihydroxyanthraquinone, C.I. disperse blue 56, disperse blue 56, 4,8-diamino-1,5-dihydroxy-2-(4-hydroxyphenyl)anthraquinone, 1,5-diamino-4,8-dihydroxy(4-methoxyphenyl)anthraquinone, 4,4-diamino-1,1-iminodianthraquinone, 1,1-imino-bis(5-aminoanthraquinone), 4,8-diamino-2-bromo-1,5-dihydroxyanthraquinone, 1,4-diaminoanthraquinone-2,3-disulfonic acid, disperse violet 8, disperse blue 81, 1,5-diamino-2-bromo-4,8-dihydroxyanthraquinone, 1,5-diamino-4,8-dihydroxy(4-hydroxyphenyl)anthraquinone, 1,8-diamino-4,5-dihydroxyanthraquinone and 1,2-diamino-3,4-dicyanoanthraquinone.

According to the invention, the process for preparing the condensate containing dye colorimetric groups preferably comprises: subjecting the dye monomers containing dye chromogenic groups to the reaction I with an excess of dibasic acid, and removing the unreacted dibasic acid. In the reaction process, the dye chromogenic groups are connected with residues of dibasic acid via the amido bonds, given that the properties of the dye monomers, the dibasic acid and the condensate containing the dye chromogenic groups are significantly different, so that the dibasic acid which does not participate in the reaction can be easily separated, and the subsequent wastewater does not contain dye by adopting the preparation method for the colored nylon in the invention, that is, the full utilization of the dye is realized, the treatment procedure of the wastewater can be simplified, and the wastewater treatment cost is saved.

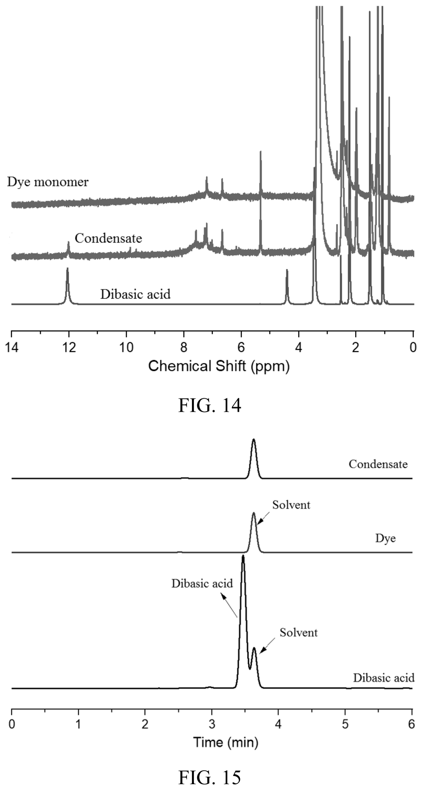

Nuclear magnetic analysis is performed on the condensate containing dye chromogenic groups, the dye monomer and the dibasic acid respectively, for example, as shown in FIG. 14, the characteristic peaks of said dye and said dibasic acid can be obviously observed from the condensate containing dye chromogenic groups, for example, a peak at a chemical shift of 12.02 ppm is corresponding to carboxyl, and the peaks at 8.0-6.5 ppm are corresponding to hydrogen on the dye; the peak at 2.24-2.18 ppm corresponds to the hydrogen peak at -CH₂- in the dibasic acid adjacent to the carboxyl group, the peak at 1.53-1.42 ppm corresponds to the hydrogen peak at -CH₂- in the middle of the dibasic acid, and the peak area ratio of the two peaks is 1:2, illustrating that in the reaction process of the dibasic acid and the dye monomer, only one carboxyl group reacts with the amino group on the dye monomer, and the carboxyl group at the other end is retained. In addition, the liquid chromatography test is performed on the condensate containing dye chromogenic groups, the dye monomer and the dibasic acid respectively, for example, as shown in FIG. 15, the existence of the dibasic acid is not observed in the condensate containing dye chromogenic groups, which indicates that the purification of said condensate is successful, and the unreacted dibasic acid can be desirably removed by refining modes such as solvent extraction, filtration drying, thereby reducing the influence on the subsequent polymerization of colored nylon, and realizing the full-scale utilization of the dye.

According to the invention, the dibasic acid is preferably aliphatic C₂-C₁₆ dibasic acid and/or aromatic C₈-C₁₄ dibasic acid, more preferably at least one selected from the group consisting of oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, terephthalic acid, phthalic acid, isophthalic acid, 1,3-naphthalic acid, 1,4-naphthalic acid, 1,5-naphthalic acid, 1,7-naphthalic acid, 2,6-naphthalic acid and 2,7-naphthalic acid.

In the present invention, the dye monomer and the dibasic acid are commercially available, or may be voluntarily prepared with a conventional preparation method.

According to the invention, the molar ratio of the dosage of said dye monomer to said dibasic acid can be matched and arranged according to factors such as the type of said dye monomer and the type of said dibasic acid. Preferably, the molar ratio of said dye monomer to said dibasic acid is 1: (0.01-100), more preferably 1: (2-50), further preferably 1: (5-20). By arranging that the cheap and easily obtained dibasic acid is greatly excessive, the reaction rate of the dye monomer can be greatly improved, and even the reaction rate of the dye can basically reach 100%.

According to the invention, as a preferred embodiment of the reaction I, the process of reaction I comprises: mixing the dye monomer with the dibasic acid to sequentially carry out a first-stage reaction I and a second-stage reaction I under an anaerobic condition.

In the present invention, the anaerobic conditions may be achieved in a conventional manner in the field, for example, by introducing nitrogen gas and/or vacuumizing.

According to the invention, preferably, the conditions of the first stage reaction I at least include: the temperature is within the range of 200-250°C, the pressure is within the range of 0.08-0.12MPa, and the time is 3-5h.

According to the invention, preferably, the conditions of the second stage reaction I at least include: the temperature is within the range of 200-250°C, the pressure is from -0.03MPa to -0.06MPa, and the time is 2-10h.

In the invention, the condensate containing dye chromogenic groups can be obtained by means of extracting and drying after cooling the reaction liquid obtained from the second stage reaction I; an extractant used in the extraction may be water or a conventional organic solvent, for example, water, methanol, ethanol or acetone. Preferably, the weight ratio of the dye monomer to the extractant is 1: (5-30).

A particularly preferred preparation method for the condensate containing dye colorimetric groups in the invention comprises: mixing the dye monomers containing the dye chromogenic groups with dibasic acid according to the molar ratio of 1: (2-50), introducing nitrogen gas for protection, and performing the reaction for 3-5h under the conditions consisting of the temperature of 215-250°C, the pressure of 0.08-0.12MPa and stirring; then vacuumizing to the pressure within a range from -0.03MPa to -0.06MPa, continuing the reaction for 2-10h under the temperature condition of 215-250°C, after completion of the reaction process, cooling the reaction liquid to room temperature to obtain a condensate crude product; adding an extracting agent (the weight ratio of the dye monomer to the extracting agent I is 1: (5-30) ) into the condensate crude product, heating and stirring, carrying out a solid-liquid separation, and drying to obtain the condensate containing dye chromogenic groups.

In the present invention, the solid-liquid separation may be performed with a conventional separation mode (e.g., filtration, centrifugation), and the drying may be carried out by a conventional drying means, such as vacuum drying, hot air drying.

Illustratively, when the dye monomer is alcohol-soluble aniline black, the synthetic route of the dye monomer and dibasic acid to form the dye condensate is as follows:

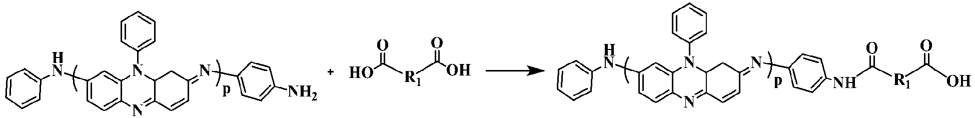

When the dye monomer is water-soluble aniline black, the synthetic route of the dye monomer and dibasic acid to form the dye condensate is as follows:

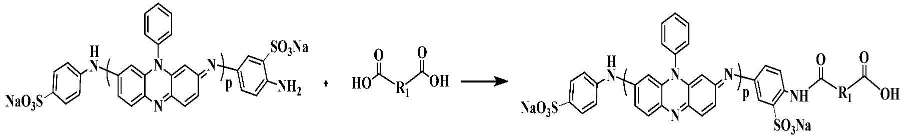

Wherein R₁ is -(CH₂)ₐ-, 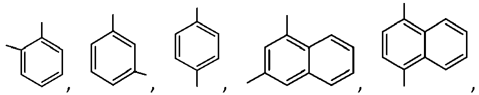 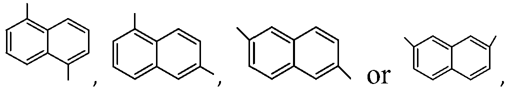 a is an integer from 0 to 14.

When the dye monomer is 1,4-diaminoanthraquinone, a first particularly preferred preparation method for the condensate containing dye chromogenic groups is adopted, and the dye monomer reacts with dibasic acid in different dosage ratios, and the synthetic route can be as follows:

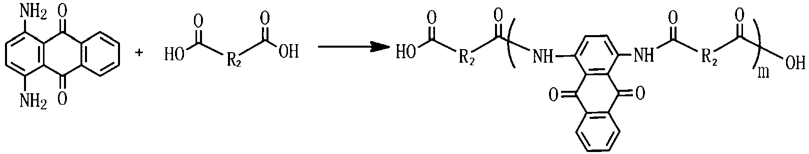

Or the synthetic route as follows:

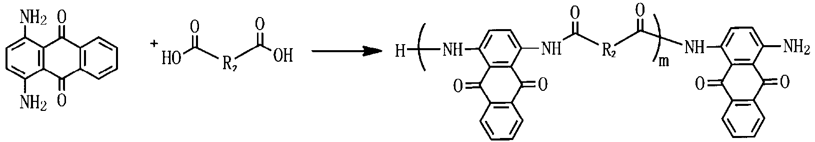

Wherein R₂ is -(CH₂)ₙ-, 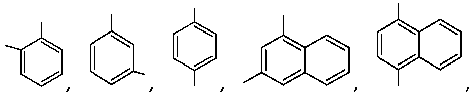 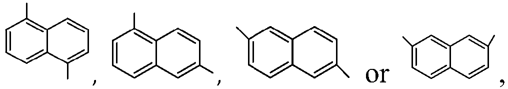 n is an integer from 1 to 14.

According to the present invention, as another preferred embodiment of the reaction I, the process of reaction I comprises: subjecting the dye monomer and the dibasic acid to the mixing reaction I to obtain a condensation salt, and sequentially carrying out a first-stage reaction II and a second-stage reaction II under an anaerobic condition.

According to the present invention, preferably, the conditions of the mixing reaction I at least include: the temperature is within the range of 50-70°C, the pressure is within the range of 0.08-0.12MPa, and the time is 1-5h;

According to the invention, preferably, the conditions of the first stage reaction II at least include: the temperature is within the range of 200-250°C, the pressure is within the range of 0.08-0.12MPa, and the time is 1-5h;

According to the invention, preferably, the conditions of the second stage reaction II at least include: the temperature is within the range of 200-250°C, the pressure is from -0.04MPa to -0.09MPa, and the time is 2-8h.

According to the present invention, the weight ratio of the condensate containing said dye chromogenic groups to the nylon monomer is preferably 1: (50-3,000), more preferably 1: (50-1,500).

In the invention, the process of the mixed reaction I is carried out in the presence of a reaction solvent I, and specifically, methanol and ethanol can be adopted; the reaction solution obtained from the mixed reaction I is subjected to solvent removal and drying treatment to obtain the condensation salt, the condensation salt is mixed with a reaction solvent II and then subjected to a first stage reaction II and a second stage reaction II in sequence, the example of said reaction solvent II can be deionized water, and the concentration of said condensation salt in a mixed solution formed by mixing said condensation salt and said reaction solvent II is within the range of 30-80 wt%. The reaction liquid obtained in the second stage reaction II is filtered, and the precipitate is subjected to washing I to obtain a concentrate containing dye chromogenic groups; the detergent I used in the washing I may be water or a conventional organic solvent, for example: water, methanol or ethanol; preferably, the mass ratio of the dye monomer to the detergent I is 1: (0.5-10).

A second particularly preferred preparation method for the condensate containing dye colorimetric groups in the invention comprises: mixing and dissolving a dibasic acid and a reaction solvent I to obtain a dibasic acid solution, heating to 50-70°C, weighing a dye monomer according to a certain proportion, dissolving the dye monomer in the reaction solvent I (the molar ratio of the dye monomer to the dibasic acid is 1: (2-50) ), dropwise adding the mixture into the dibasic acid solution, keeping the temperature under the pressure of 0.08-0.12MPa for carrying out the reaction for 1-5 hours after the dropwise adding is finished, removing the reaction solvent I by rotary evaporation, and drying to obtain a condensation salt; mixing and dissolving the condensation salt and deionized water to prepare an aqueous condensation salt solution with certain solubility (the concentration of said condensation salt is 30-80 wt%), performing the reaction for 1-5h under the conditions consisting of the temperature of 200-250°C and the pressure of 0.08-0.12MPa in a nitrogen gas environment, vacuumizing to the pressure within the range from -0.04 MPa to -0.09 MPa, continuing the reaction for 2-8h, finishing the reaction, cooling the reaction liquid to room temperature, filtering, washing I and drying the precipitate to obtain the condensate containing dye chromogenic groups.

Illustratively, when the dye monomer is 2,6-diaminoanthraquinone, a second particularly preferred preparation method for the condensate containing dye chromogenic groups is adopted, the dye monomer reacts with the dibasic acid in different dosage ratios, and the synthetic route may be as follows:

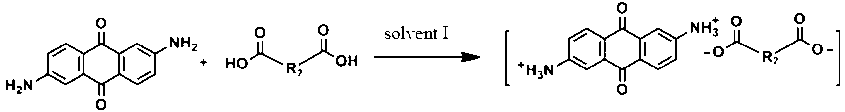

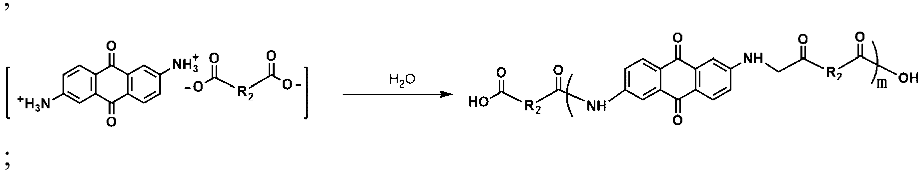

Or the synthetic route may be as follows:

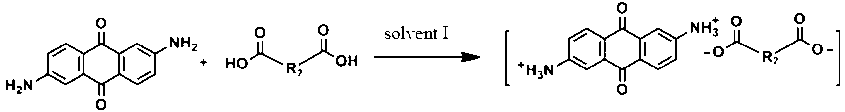

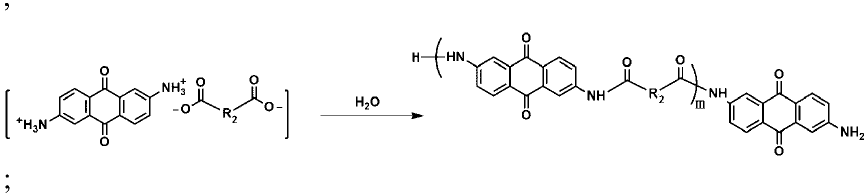

Wherein R₂ is-(CH₂)ₙ-, 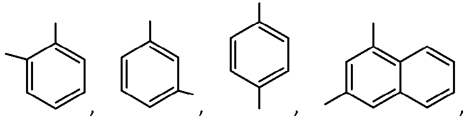 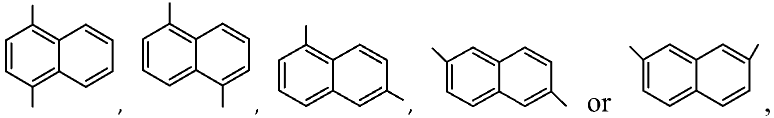 n is an integer from 1 to 14.

According to the present invention, the dosage ratio of the condensate containing dye chromogenic groups to the nylon monomer can be matched and arranged according to the types of nylon monomer and dye chromogenic groups, the depth requirement of dyeing process, and other factors. Illustratively, the weight ratio of the condensate containing said dye chromogenic groups to the nylon monomer is 1: (50-3,000), more preferably 1: (50-1,500), further preferably 1: (100-200).

According to the invention, the nylon monomer may be any monomer substance for synthesizing nylon, or the monomer substance for synthesizing nylon is polymerized with an auxiliary tool (at least one of ω-aminocarboxylic acid, ω-aminocarboxylate and polyamine-polyacid mixture) to form the corresponding nylon.

As a preferred embodiment of the nylon monomer, the nylon monomer is lactam, preferably C₂-C₂₀ lactam, more preferably at least one selected from the group consisting of caprolactam, undecalactam and dodecalactam. Under the circumstance, the nylon monomer may further comprise at least one of ω-aminocarboxylic acid, ω-aminocarboxylate and polyamine-polyacid mixture, wherein the ω-aminocarboxylic acid is at least one selected from the group consisting of aminocaproic acid, aminoundecanoic acid and aminododecanoic acid, the ω-aminocarboxylate is at least one selected from the group consisting of nylon 66 salt, nylon 610 salt, nylon 612 salt, nylon 56 salt, nylon 512 salt, nylon 1212 salt, nylon 1313 salt, nylon 1012 salt and nylon 1010 salt, a polyamine in the polyamine-polyacid mixture is at least one selected from the group consisting of ethylenediamine, hexamethylenediamine, decamethylenediamine and p-phenylenediamine, and a polyacid in the polyamine-polyacid mixture is at least one selected from the group consisting of oxalic acid, adipic acid, sebacic acid and dodecanedioic acid.

In the present invention, R₂ may be any aliphatic alkylidene, for example, methylidene, ethylidene, propylidene, butylidene, pentylidene, hexylidene, heptylidene, octylidene, nonylidene, decylidene, undecylidene, dodecylidene; or any aromatic alkylidene, such as terephthalylidene, o-phthalylidene, m-phthalylidene, 1,3-naphthalene dimethylidene, 1,4-naphthalene dimethylidene, 1,5-naphthalene dimethylidene, 1,7-naphthalene dimethylidene, 2,6-naphthalene dimethylidene, 2,7-naphthalene dimethylidene; preferably, R₂ is C₂-C₁₆ aliphatic alkylidene or C₈-C₁₄ aromatic alkylidene, more preferably C₈-C₁₄ aromatic alkylidene. The inventors have found that in the preferred embodiment, the nylon product has higher dyeing uniformity and better dyeing stability.

As another preferred embodiment of the nylon monomer, the nylon monomer is an aliphatic nylon salt, preferably at least one selected from the group consisting of nylon 66 salt, nylon 610 salt, nylon 612 salt, nylon 56 salt, nylon 512 salt, nylon 1212 salt, nylon 1313 salt, nylon 1012 salt and nylon 1010 salt.

In the present invention, the nylon monomer is commercially available, or can be voluntarily prepared with a conventional preparation method.

According to the invention, when the nylon monomer is lactam, the condensation reaction is performed in the presence of an auxiliary agent, wherein the auxiliary agent is an organic monoacid, preferably, when the nylon monomer is at least one selected from the group consisting of caprolactam, undecalactam and dodecalactam, the auxiliary agent is an aliphatic monoacid and/or an aromatic monoacid, more preferably an aromatic monoacid, further preferably benzoic acid.

Based on that the nylon monomer is lactam, the condensation reaction system may further comprise at least one of ω-aminocarboxylic acid, ω-aminocarboxylate and polyamine-polyacid mixture, wherein the ω-aminocarboxylic acid is at least one selected from the group consisting of aminocaproic acid, aminoundecanoic acid and aminododecanoic acid, the ω-aminocarboxylate is at least one selected from the group consisting of nylon 66 salt, nylon 610 salt, nylon 612 salt, nylon 56 salt, nylon 512 salt, nylon 1212 salt, nylon 1313 salt, nylon 1012 salt and nylon 1010 salt, a polyamine in the polyamine-polyacid mixture is at least one selected from the group consisting of ethylenediamine, hexamethylenediamine, decamethylenediamine and p-phenylenediamine, and a polyacid in the polyamine-polyacid mixture is at least one selected from the group consisting of oxalic acid, adipic acid, sebacic acid and dodecanedioic acid.

According to the invention, the molar ratio of the terminal amino group of the polyamine to the carboxyl group of the polyacid is preferably 1: (0.9-1.1).

In the meanwhile, it is further preferable that the condensation reaction comprises a ring-opening reaction, a first-stage reaction III, a second-stage reaction III, and a third-stage reaction I, which are sequentially performed.

According to the invention, preferably, the conditions of the ring-opening reaction at least include: the temperature is within the range of 200-230°C, the pressure is within the range of 0.08-0.12MPa, and the time is 0.5-1 h.

According to the present invention, preferably, the conditions of the first stage reaction III at least include: the temperature is within the range of 240-270°C, the pressure is within the range of 0.6-1.5MPa, and the time is 2-4 h.

According to the invention, preferably, the conditions of the second stage reaction III at least include: the temperature is within the range of 235-250°C, the pressure is within the range of 0.08-0.12MPa, and the time is 0.5-1.5 h.

According to the present invention, preferably, the conditions of the third-stage reaction I at least include: the temperature is within the range of 235-250°C, the pressure is within the range from -0.05MPa to -0.09MPa, and the time is 1-3 h.

Illustratively, the first particularly preferred preparation method of the colored nylon in the present invention comprises: mixing the condensate containing dye chromogenic groups, the lactam, benzoic acid and deionized water (the weight ratio of said condensate and said lactam is 1: (50-2,000), preferably 1: (50-200), the weight ratio of said deionized water and said lactam is 1: (20-100), and the molar ratio of said benzoic acid to said lactam is 1: (50-300) ), vacuumizing and introducing nitrogen gas, circulating the operation for three times, and replacing air in the system with nitrogen gas; carrying out the reaction for 0.5-1h under the conditions consisting of a temperature of 200-230°C and a pressure of 0.08-0.12MPa, performing the ring-opening reaction on lactam, then further heating to 240-270°C and controlling the system pressure to be within 0.6-1.5MPa for carrying out the reaction for 2-4h, then cooling to 235-250°C, releasing the system pressure, continuously reacting for 0.5-1.5h under the pressure condition of 0.08-0.12MPa after the depressurization, finally vacuumizing, controlling the system pressure to be within a range from -0.05MPa to -0.09MPa, performing the reaction for 1-3h to obtain a reaction liquid, and cooling the reaction molten mass.

According to the invention, when the nylon monomer is aliphatic nylon salt, the auxiliary agent is organic dibasic acid, in a case of preferably, the nylon monomer is at least one selected from the group consisting of nylon 66 salt (adipic acid hexamethylenediamine salt), nylon 610 salt (sebacic acid hexamethylenediamine salt), nylon 612 salt (dodecanedioic acid hexamethylenediamine salt), nylon 56 salt (adipic acid pentanediamine salt), nylon 512 salt (dodecanedioic acid pentanediamine salt), nylon 1212 salt (dodecanedioic acid dodecyldiamine salt), nylon 1313 salt (tridecanedioic acid tridecane diamine salt), nylon 1012 salt (dodecanedioic acid decanediamine salt) and nylon 1010 salt (sebacic acid decanediamine salt); the condensation reaction is carried out in the presence of an auxiliary agent, wherein the auxiliary agent is an organic dibasic acid, preferably an aliphatic dibasic acid and/or an aromatic dibasic acid, more preferably an aliphatic dibasic acid, further preferably adipic acid.

Further preferable, the condensation reaction includes a first-stage reaction IV and a second-stage reaction IV which are sequentially performed.

According to the present invention, preferably, the conditions of the first stage reaction IV at least comprise: the temperature is within the range of 180-230°C, the pressure is within the range of 1-1.8MPa, and the time is 2-4h.

According to the present invention, preferably, the conditions of the second stage reaction IV at least comprise: the temperature is within the range of 240-270°C, the pressure is from -0.05MPa to -0.09MPa, and the time is 1-3h.

According to the invention, the depressurization time of the first stage reaction IV is preferably within the range of 1-1.5h.

Illustratively, the second particularly preferred preparation method of the nylon product in the present invention comprises: mixing the condensate containing dye chromogenic groups, the aliphatic nylon salt, adipic acid and deionized water (the weight ratio of the dye condensate and the nylon monomer is 1: (50-3,000), the weight ratio of the deionized water and the nylon monomer is 1: (5-50), and the molar ratio of the adipic acid to the nylon monomer is 1: (30-200) ), vacuumizing and introducing nitrogen gas, circulating the operation for three times, and replacing air in the system with nitrogen gas; carrying out the reaction for 2-4h under the conditions consisting of a temperature of 200-230°C and a pressure of 1-1.8MPa, releasing the system pressure to normal pressure, and controlling the depressurization time to be within the range of 1-1.5h, further heating to 240-270°C, vacuumizing and controlling the system pressure to be from -0.05MPa to -0.09MPa, performing the reaction for 1-3h to obtain a reaction liquid, and cooling the reaction molten mass.

According to the invention, the molar ratio of the dosage of the nylon monomer to the auxiliary agent can be matched and arranged according to the type of the nylon monomer, the molecular weight of the formed colored nylon polymer, and other factors. Preferably, the molar ratio of the nylon monomer to the auxiliary is (30-350):1, more preferably (50-320):1, further preferably (90-320):1. In a case of preferably, the reaction efficiency of the nylon polymerization system with the condensate containing dye chromogenic groups can be effectively improved.

In the invention, the condensation reaction is carried out on the condensate containing dye chromogenic groups, the nylon monomer and an auxiliary agent in a reaction solvent, and the reaction solvent may be deionized water. The weight ratio of the reaction solvent to the nylon monomer is preferably 1: (5-100). The condensation reaction of the colored nylon can be effectively carried out under the condition of a low dosage of deionized water, the adopted reaction solvent accounts for a small amount relative to the nylon monomer, and the deionized water is volatilized under the high-temperature reaction condition required by the condensation reaction, such that the molten mass obtained from the condensation reaction can be cooled and then directly subjected to slicing and other nylon product processing procedures.

The method in the invention can be regarded as integrating the two processes of preparing nylon and dyeing. Compared with the prior art that the nylon is initially prepared and then subjected to a dyeing process, the method of the invention has a simple process and a reduced implementation difficulty, and the obtained colored nylon has high color fastness and high color uniformity, and the dyeing degree can be controlled in a large range by controlling the addition amount of said dye. Compared with the prior art that the amine dye, the diamine and the dicarboxylic acid or the binary acyl halide are steamed in one pot to prepare the nylon, the invention has the following advantages: on one hand, the amine dye can be completely reacted by increasing the addition amount of the dicarboxylic acid, and the utilization rate of the dye is increased; on the other hand, the unreacted dibasic acid can be recycled after being separated and purified by utilizing the characteristic that the polycondensate has larger property difference with the amine dye and the dibasic acid and can be easily separated, and the full dose utilization of the amine dye is realized without discharge of dye wastewater.

The third aspect of the present invention provides the colored nylon produced with the aforementioned preparation method.

In the invention, the colored nylon produced with the aforementioned preparation method may be subjected to slicing, spinning or winding, and other process as required, and can be processed into fibers and other materials.

The fourth aspect of the present invention provides an application of the aforementioned colored nylon in at least one of textile, industrial fibres and engineering materials.

The present invention will be described in detail below with reference to examples.

In the following examples and comparative examples, the test process of steaming a mixture of colored nylon and an organic solvent was as follows: the colored nylon was mixed with ethyl acetate in a weight ratio 1:3, then subjected to refluxing and steaming at 77°C for 24h, the solid material colored nylon contained therein was filtered off, whether there was a change of color of ethyl acetate supernatant may be then observed, the chromaticity of ethyl acetate supernatant after steaming was measured according to the standard HJ 1182-2021 "Water quality - Determination of colority - Dilution level method". The colour fastness to water immersion of colored nylon was measured according to the international standard ISO 105-E01, the colour fastness to perspiration of the colored nylon was measured according to the international standard ISO 105-E04, the colour fastness to soap washing of the colored nylon was measured according to the international standard ISO 105-C10.

The process for measuring the content of halogen ions in a boiling solution of the colored nylon was as follows: the colored nylon was mixed with deionized water in weight ratio 1:1, the mixture was then steamed at 100°C for 3h to obtain a boiling solution, the boiling solution was sampled and the concentration of free halogen ions was measured by using the ion chromatography.

The dyeing uniformity effect was characterized by the difference in color depth Sr, and the test process was as follows: the difference in color depth of dyeing was expressed by the standard deviation ΔK/S of the ratio K/S of the colorant absorption coefficient K to the colorant scattering coefficient S of the plurality of test points; the K/S values of different sites of a nylon slice with the dimensions of 10cm*10cm and the thickness of 3mm were measured on the Datacolor 850 type color measuring and matching instrument (each slice site was measured by using 8 measurement points taken along two diagonal lines and two long sides). The standard deviation ΔK/S was obtained from the calculation based on the sample data of K/S values was exactly the difference in color depth (denoted by Sr).

Unless otherwise specified in the invention, the raw materials and reagents used herein were all conventional and commercially available products.

Unless otherwise specified in the invention, the normal pressure denoted 1 atmospheric pressure, which was about 0.1MPa.

### Preparation Example 1

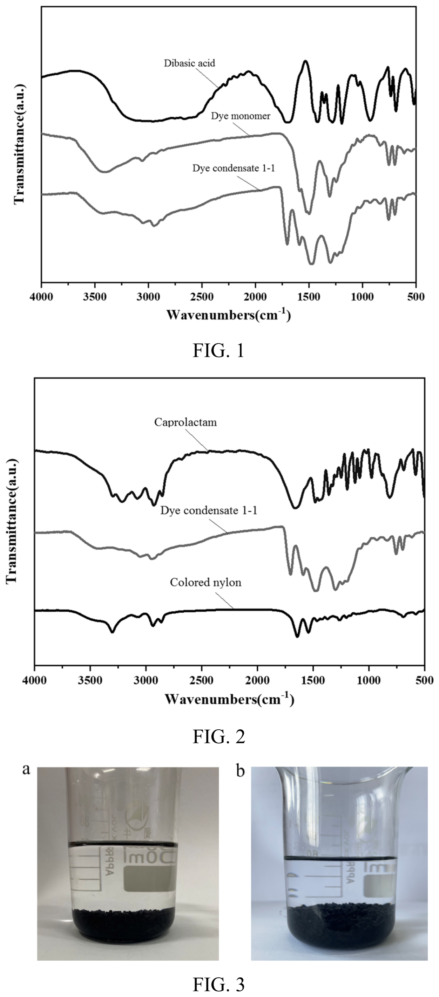

10.0g of alcohol-soluble aniline black (the structural formula was 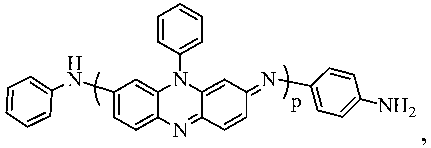 p was 1) and 125g of succinic acid were added into a reactor in sequence, then heated to 220°C and carried out the reaction for 3 hours under the nitrogen gas atmosphere; vacuumized to a pressure of -0.04 MPa, the reaction was continued at 220°C for 7 hours, the stirring was stopped, the reaction liquid was poured into a 250ml beaker, cooled to room temperature, 100ml of water was added into the beaker, heated, stirred and extracted, and then subjected to filtering and drying to obtain a carboxyl-containing dye condensate 1-1; the structural formula of the dye condensate 1-1 was shown in Table 1, the infrared spectrum data were as follows: the wave number 3100-3000cm⁻¹ corresponded to the stretching vibration peak of the group =CH- on the benzene ring of aniline black; two absorption peaks were presented between wave number 2939-2859cm⁻¹, corresponded to the stretching vibration peaks of the group -CH₂- on the fatty chain; the absorption peak with a wave number 3303cm⁻¹ corresponded to the stretching vibration peaks of the group N-H on an amido bond; the wave number 1643cm⁻¹ corresponded to the absorption peak of carboxyl; a characteristic peak of carbon-nitrogen double bonds was presented at the vicinity of 1588cm⁻¹; the characteristic peaks of the cyclohexadienyl group were presented near 1487-1460cm⁻¹; the infrared spectrogram of the dye monomer, dibasic acid and dye condensate 1-1 in Preparation Example 1 was shown in FIG. 1.

### Preparation Example 2

10g of water-soluble aniline black (the structural formula was 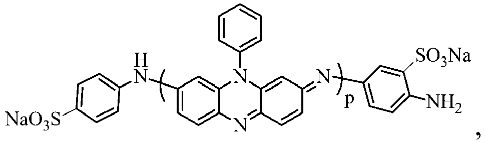 p was 1) and 87.5g of adipic acid were added into a reactor in sequence, then heating to 230°C and carried out the reaction for 3 hours under the nitrogen gas atmosphere; vacuumized to a pressure of -0.06 MPa, the reaction was continued at 230°C for 5.5 hours, the stirring was stopped, the reaction liquid was poured into a 250ml beaker, cooled to room temperature, 100ml of methanol was added into the beaker, heated, stirred and extracted, and then subjected to filtering and drying to obtain a carboxyl-containing dye condensate 1-2; the structural formula of the dye condensate 1-2 was shown in Table 1, the infrared spectrum data were as follows: the wave number 3150-3010cm⁻¹ corresponded to the stretching vibration peak of the group =CH- on the benzene ring of aniline black; two absorption peaks were presented between wave number 2945-2850cm⁻¹, corresponded to the stretching vibration peaks of the group -CH₂- on the fatty chain; the absorption peak with wave number 3310cm⁻¹ corresponded to the stretching vibration peaks of the group N-H on an amido bond; the wave number 1650cm⁻¹ corresponded to the absorption peak of carboxyl; a characteristic peak of carbon-nitrogen double bonds was presented at the vicinity of 1590cm⁻¹; the characteristic peaks of the cyclohexadienyl group were presented near 1492-1450cm⁻¹.

The nuclear magnetic analyses performed on the dye condensate, the dye monomer and the dibasic acid of Preparation Example 2 were shown in FIG. 14, and the liquid chromatography test performed on the dye condensate, the dye monomer and the dibasic acid were shown in FIG. 15.

### Preparation Example 3

10g of water-soluble aniline black (the structural formula was 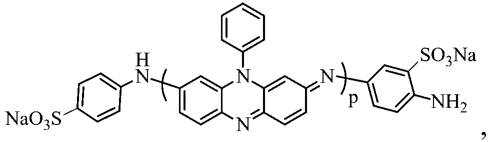 p was 2) and 58.5g of sebacic acid were added into a reactor in sequence, then heated to 235°C and carried out the reaction for 3 hours under the nitrogen gas atmosphere; vacuumized to a pressure of -0.04 MPa, the reaction was continued at 235°C for 7 hours, the stirring was stopped, the reaction liquid was poured into a 250ml beaker, cooled to room temperature, 100ml of ethanol was added into the beaker, heated, stirred and extracted, and then subjected to filtering and drying to obtain a carboxyl-containing dye condensate 1-3; the structural formula of the dye condensate 1-3 was shown in Table 1, the infrared spectrum data were as follows: the wave number 3200-3020cm⁻¹ corresponded to the stretching vibration peak of the group =CH- on the benzene ring of aniline black; two absorption peaks were presented between wave number 2905-2810cm⁻¹, corresponded to the stretching vibration peaks of the group -CH₂- on the fatty chain; the absorption peak with wave number 3302cm⁻¹ corresponded to the stretching vibration peaks of the group N-H on an amido bond; the wave number 1652cm⁻¹ corresponded to the absorption peak of carboxyl; a characteristic peak of carbon-nitrogen double bonds was presented at the vicinity of 1591cm⁻¹; the characteristic peaks of the cyclohexadienyl group were presented near 1496-1457cm⁻¹.

### Preparation Example 4

10g of dye monomer (the structural formula was 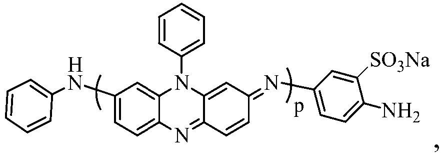 p was 2) and 58.5g of sebacic acid were added into a reactor in sequence, then heated to 235°C and carried out the reaction for 3 hours under the nitrogen gas atmosphere; vacuumized to a pressure of -0.04 MPa, the reaction was continued at 235°C for 7 hours, the stirring was stopped, the reaction liquid was poured into a 250ml beaker, cooled to room temperature, 100ml of ethanol was added into the beaker, heated, stirred and extracted, and then subjected to filtering and drying to obtain a carboxyl-containing dye condensate 1-4; the structural formula of the dye condensate 1-4 was shown in Table 1, the infrared spectrum data were as follows: the wave number 3210-3010cm⁻¹ corresponded to the stretching vibration peak of the group =CH- on the benzene ring of aniline black; two absorption peaks were presented between wave number 2950-2840cm⁻¹, corresponded to the stretching vibration peaks of the group -CH₂- on the fatty chain; the absorption peak with wave number 3315cm⁻¹ corresponded to the stretching vibration peaks of the group N-H on an amido bond; the wave number 1658cm⁻¹ corresponded to the absorption peak of carboxyl; a characteristic peak of carbon-nitrogen double bonds was presented at the vicinity of 1595cm⁻¹; the characteristic peaks of the cyclohexadienyl group were presented near 1495-1445cm⁻¹.

### Preparation Example 5

10g of acid blue 260 (the structural formula was 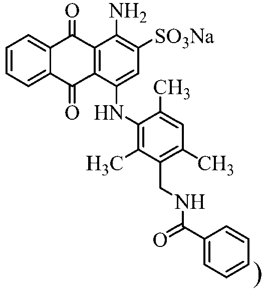 and 32.0g of succinic acid were added into a reactor in sequence, then heated to 220°C and carried out the reaction for 3 hours under the nitrogen gas atmosphere; vacuumized to a pressure of -0.04 MPa, the reaction was continued at 220°C for 7 hours, the stirring was stopped, the reaction liquid was poured into a 250ml beaker, cooled to room temperature, 100ml of water was added into the beaker, heated and extracted, and then subjected to filtering and drying to obtain a carboxyl-containing dye condensate 1-5; the structural formula of the dye condensate 1-5 was shown in Table 1, the infrared spectrum data were as follows: the small absorption peak presented at the wave number 3100-3000cm⁻¹ corresponded to the stretching vibration peak of the group =CH- on the anthraquinone ring; the absorption peak between the wave number 2900-2750 cm⁻¹ corresponded to the stretching vibration peak of the group -CH₂- on the fatty chain; the absorption peak presented at the wave number 3260cm⁻¹ corresponded to the stretching vibration peak of the group N-H on an amido bond.

### Preparation Example 6

10g of acid blue 260 (the structural formula was the same as that in Preparation Example 5) and 39g of adipic acid were added into a reactor in sequence, then heated to 230°C and carried out the reaction for 3.0 hours under the nitrogen gas atmosphere; vacuumized to a pressure of -0.04 MPa, the reaction was continued at 230°C for 7 hours, the stirring was stopped, the reaction liquid was poured into a 250ml beaker, cooled to room temperature, 100ml of methanol was added into the beaker, heated and extracted, and then subjected to filtering and drying to obtain a carboxyl-containing dye condensate 1-6; the structural formula of the dye condensate 1-6 was shown in Table 1, the infrared spectrum data were as follows: the small absorption peak presented at the wave number 3100-3000cm⁻¹ corresponded to the stretching vibration peak of the group =CH- on the anthraquinone ring; the absorption peak between the wave number 2920-2760 cm⁻¹ corresponded to the stretching vibration peak of the group -CH₂- on the fatty chain; the absorption peak presented at the wave number 3250cm⁻¹ corresponded to the stretching vibration peak of the group N-H on an amido bond.

### Preparation Example 7

10g of acid blue 260 (the structural formula was the same as that in Preparation Example 5) and 54g of sebacic acid were added into a reactor in sequence, then heated to 235°C and carried out the reaction for 3.0 hours under the nitrogen gas atmosphere; vacuumized to a pressure of -0.04 MPa, the reaction was continued at 235°C for 7 hours, the stirring was stopped, the reaction liquid was poured into a 250ml beaker, cooled to room temperature, 100ml of ethanol was added into the beaker, heated and extracted, and then subjected to filtering and drying to obtain a carboxyl-containing dye condensate 1-7; the structural formula of the dye condensate 1-7 was shown in Table 1, the infrared spectrum data were as follows: the small absorption peak presented at the wave number 3100-3000cm⁻¹ corresponded to the stretching vibration peak of the group =CH- on the anthraquinone ring; the absorption peak between the wave number 2930-2780 cm⁻¹ corresponded to the stretching vibration peak of the group -CH₂- on the fatty chain; the absorption peak presented at the wave number 3270cm⁻¹ corresponded to the stretching vibration peak of the group N-H on an amido bond.

### Preparation Example 8

A dye condensate was prepared according to the method of Preparation Example 1, except that the structural formula of the alcohol-soluble aniline black was replaced by 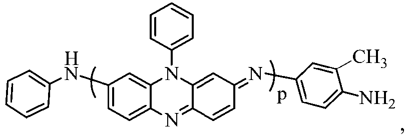 p was 1; the carboxyl-containing dye condensate 1-8 was obtained; the structural formula of the dye condensate 1-8 was shown in Table 1, and the infrared spectrum data are as follows: the wave number 3150-3010cm⁻¹ corresponded to the stretching vibration peak of the group =CH- on the benzene ring of aniline black; two absorption peaks were presented between wave number 2945-2850cm⁻¹, corresponded to the stretching vibration peaks of the group -CH₂- on the fatty chain; the absorption peak with a wave number 3315cm⁻¹ corresponded to the stretching vibration peaks of the group N-H on an amido bond; the wave number 1650cm⁻¹ corresponded to the absorption peak of carboxyl; a characteristic peak of carbon-nitrogen double bonds was presented at the vicinity of 1595cm⁻¹; the characteristic peaks of the cyclohexadienyl group were presented near 1495-1455cm⁻¹.

### Preparation Example 9

A dye condensate was prepared according to the method of Preparation Example 2, except that the structural formula of the water-soluble aniline black was replaced by 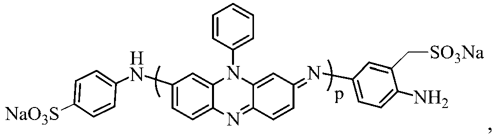 a carboxyl-containing dye condensate 1-9 was obtained; the structural formula of the dye condensate 1-9 is shown in Table 1, and the infrared spectrum data are as follows: the wave number 3150-3010cm⁻¹ corresponded to the stretching vibration peak of the group =CH- on the benzene ring of aniline black; two absorption peaks were presented between wave number 2945-2850cm⁻¹, corresponded to the stretching vibration peaks of the group -CH₂- on the fatty chain; the absorption peak with wave number 3310cm⁻¹ corresponded to the stretching vibration peaks of the group N-H on an amido bond; the wave number 1652cm⁻¹ corresponded to the absorption peak of carboxyl; a characteristic peak of carbon-nitrogen double bonds was presented at the vicinity of 1593cm⁻¹; the characteristic peaks of the cyclohexadienyl group were presented near 1497-1452cm⁻¹.

### Preparation Example 10

A dye condensate was prepared according to the method of Preparation Example 5, except that the structural formula of acid blue 260 was replaced by 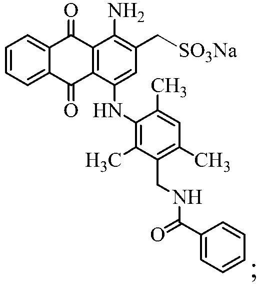 a carboxyl-containing dye condensate 1-10 was obtained; the structural formula of the dye condensate 1-10 was shown in Table 1, the infrared spectrum data were as follows: the small absorption peak presented at the wave number 3100-3000cm⁻¹ corresponded to the stretching vibration peak of the group =CH- on the anthraquinone ring; the absorption peak between the wave number 2935-2765 cm⁻¹ corresponded to the stretching vibration peak of the group -CH₂- on the fatty chain; the absorption peak presented at the wave number 3270cm⁻¹ corresponded to the stretching vibration peak of the group N-H on an amido bond.

### Preparation Example 11

A dye condensate 1-3 was prepared according to the method of Preparation Example 3, except that the reaction process was replaced by the following reaction process: the materials were heated to 215°C and carried out the reaction for 5 hours under the nitrogen gas atmosphere; vacuumized to a pressure of -0.03 MPa, the reaction was continued at 215°C for 10 hours, the stirring was stopped, the reaction liquid was poured into a 250ml beaker, cooled to room temperature, 100ml of ethanol was added into the beaker, heated, stirred and extracted, and then subjected to filtering and drying to obtain a carboxyl-containing dye condensate 1-3.

### Preparation Example 12

A dye condensate 1-3 was prepared according to the method of Preparation Example 3, except that the reaction process was replaced by the following reaction process: the materials were heated to 250°C and carried out the reaction for 3 hours under the nitrogen gas atmosphere; vacuumized to a pressure of -0.06 MPa, the reaction was continued at 250°C for 4 hours, the stirring was stopped, the reaction liquid was poured into a 250ml beaker, cooled to room temperature, 100ml of ethanol was added into the beaker, heated, stirred and extracted, and then subjected to filtering and drying to obtain a carboxyl-containing dye condensate 1-3.

### Preparation Example 13

A dye condensate 1-3 was prepared according to the method of Preparation Example 3, except that the reaction process was replaced by the following reaction process: the materials were heated to 200°C and carried out the reaction for 3 hours under the nitrogen gas atmosphere; vacuumized to a pressure of -0.06 MPa, the reaction was continued at 200°C for 4 hours, the stirring was stopped, the reaction liquid was poured into a 250ml beaker, cooled to room temperature, 100ml of ethanol was added into the beaker, heated, stirred and extracted, and then subjected to filtering and drying to obtain a carboxyl-containing dye condensate 1-3.

### Preparation Example 14

A dye condensate was prepared according to the method of Preparation Example 1, except that the structural formula of the alcohol-soluble aniline black was replaced with 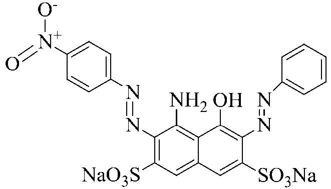 (acid black), a carboxyl-containing dye condensate 1-11 was obtained; the structural formula of the dye condensate 1-11 was shown in Table 1.

**Table 1 Structural formulae of the dye condensate in Preparation Examples**

| No. | Structural formulae of condensate |
|---|---|
| Preparation Example 1 | 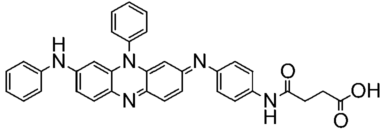 |
| Preparation Example 2 | 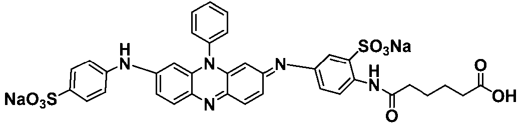 |
| Preparation Example 3 | 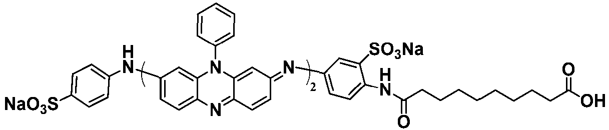 |
| Preparation Example 4 | 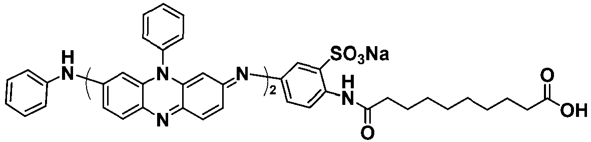 |
| Preparation Example 5 | 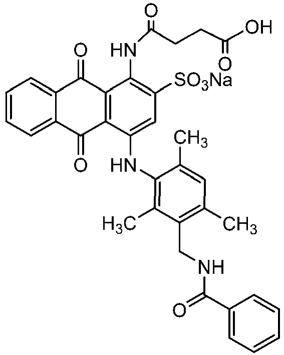 |
| Preparation Example 6 | 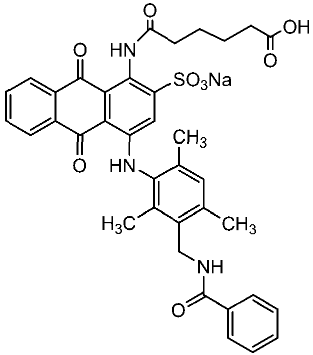 |
| Preparation Example 7 | 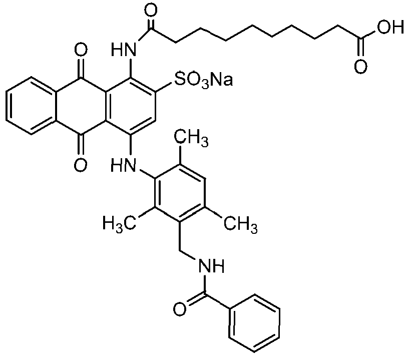 |
| Preparation Example 8 | 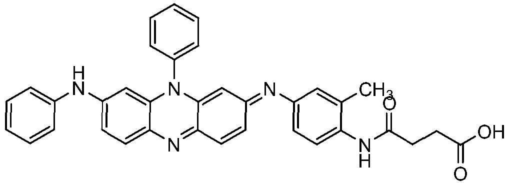 |
| Preparation Example 9 | 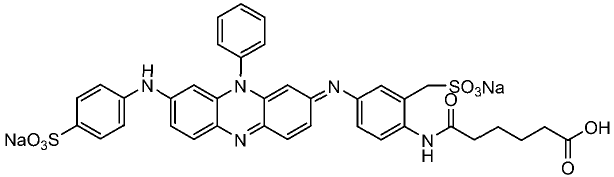 |
| Preparation Example 10 | 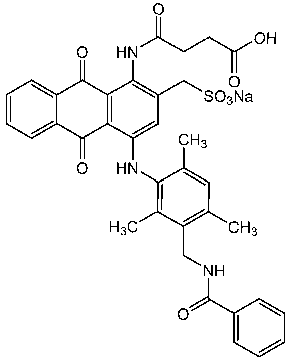 |
| Preparation Example 14 | 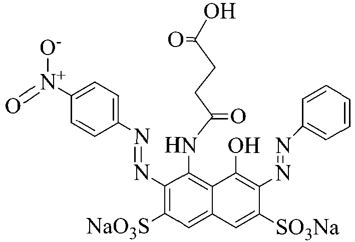 |

### Example 1

1,500g of caprolactam, 8.1g of benzoic acid, 10.82g of dye condensate 1-1 prepared in Preparation Example 1 and 68.2ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 230°C, an opening-ring reaction was performed for 0.5h under the normal pressure and the stirring condition with a rotational speed of 400 rpm; then further heated to 250°C, the pressure of the system was controlled to 1.5MPa by removing redundant water, and the reaction was performed for 2.5h; the temperature was decreased to 240°C, the system pressure was released, the reaction was continued under normal pressure for 1.0h; the system was vacuumized until the pressure of the system was -0.09MPa, after the reaction was carried out for 1.5h, the reaction was stopped, the materials were discharged, cooled and sliced to obtain the black nylon-6 polymer.

The infrared spectrogram of the dye condensate 1-1, caprolactam and black nylon-6 of Example 1 were shown in FIG. 2.

### Example 2

1,100g of nylon-66 salt, 4.82g of adipic acid, 6.25g of dye condensate 1-2 prepared in Preparation Example 2, and 58.9ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 215°C in the nitrogen gas atmosphere, the stirring with a rotational speed of 450rpm was started, the system pressure was maintained to 1.7MPa by removing water in said system, the reaction was performed at a constant temperature for 2.5h; the system pressure was then released to normal pressure (the pressure relief time was about 1.5h); finally, the temperature was further raised to 265°C, the system was vacuumized until the system pressure was -0.08MPa, the reaction was continued for 2h, the reaction was stopped, the stirrer was shut off, the molten mass in the reaction kettle was poured out, cooled to room temperature, and sliced to obtain the black nylon-66 polymer.

### Example 3

1,700g of nylon-1010 salt, 6.64g of adipic acid, 15.7g of dye condensate 1-3 prepared in Preparation Example 3, and 250ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 210°C in the nitrogen gas atmosphere, the stirring with a rotational speed of 450rpm was started, the system pressure was maintained to 1.55MPa by removing water in said system, the reaction was performed at a constant temperature for 3h; the system pressure was then released to normal pressure (the pressure relief time was about 1h); finally, the temperature was further raised to 260°C, the system was vacuumized until the system pressure was -0.08MPa, the reaction was continued for 2h, the reaction was stopped, the stirrer was shut off, the molten mass in the reaction kettle was poured out, cooled to room temperature, and sliced to obtain the black nylon-1010 polymer.

### Example 4

1,530g of nylon-612 salt, 6.58g of adipic acid, 12.8g of dye condensate 1-1 prepared in Preparation Example 1, and 102.0ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C in the nitrogen gas atmosphere, the stirring with a rotational speed of 450rpm was started, the system pressure was maintained to 1.80MPa by removing water in said system, the reaction was performed at a constant temperature for 2h; the system pressure was then released to normal pressure (the pressure relief time was about 1.5h); finally, the temperature was further raised to 270°C, the system was vacuumized until the system pressure was -0.06MPa, the reaction was continued for 3h, the reaction was stopped, the stirrer was shut off, the molten mass in the reaction kettle was poured out, cooled to room temperature, and sliced to obtain the black nylon-612 polymer.

### Example 5

The black nylon-612 polymer was prepared according to the method of Example 4, except that the dye condensate 1-1 prepared in Preparation Example 1 was replaced with the dye condensate 1-4 prepared in Preparation Example 4.

### Example 6

The black nylon-6 polymer was prepared according to the method of Example 1, except that the dye condensate 1-1 prepared in Preparation Example 1 was replaced with the dye condensate 1-5 prepared in Preparation Example 5.

### Example 7

The black nylon-66 polymer was prepared according to the method of Example 2, except that the dye condensate 1-2 prepared in Preparation Example 2 was replaced with the dye condensate 1-6 prepared in Preparation Example 6.

### Example 8

The black nylon-1010 polymer was prepared according to the method of Example 3, except that the dye condensate 1-3 prepared in Preparation Example 3 was replaced with the dye condensate 1-7 prepared in Preparation Example 7.

### Example 9

The black nylon-612 polymer was prepared according to the method of Example 4, except that the dye condensate 1-1 prepared in Preparation Example 1 was replaced with the dye condensate 1-8 prepared in Preparation Example 8.

### Example 10

The black nylon-612 polymer was prepared according to the method of Example 4, except that the dye condensate 1-1 prepared in Preparation Example 1 was replaced with the dye condensate 1-9 prepared in Preparation Example 9.

### Example 11

The black nylon-1010 polymer was prepared according to the method of Example 3, except that the dye condensate 1-3 prepared in Preparation Example 3 was replaced with the dye condensate 1-10 prepared in Preparation Example 10.

### Example 12

The black nylon-612 polymer was prepared according to the method of Example 4, except that the dye condensate 1-1 prepared in Preparation Example 1 was replaced with the dye condensate 1-3 prepared in Preparation Example 11.

### Example 13

The black nylon-612 polymer was prepared according to the method of Example 4, except that the dye condensate 1-1 prepared in Preparation Example 1 was replaced with the dye condensate 1-3 prepared in Preparation Example 12.

### Example 14

The black nylon-612 polymer was prepared according to the method of Example 4, except that the dye condensate 1-1 prepared in Preparation Example 1 was replaced with the dye condensate 1-3 prepared in Preparation Example 13.

### Example 15

The black nylon-612 polymer was prepared according to the method of Example 4, except that the dye condensate 1-1 prepared in Preparation Example 1 was replaced with the dye condensate 1-11 prepared in Preparation Example 14.

### Example 16

The black nylon-6 polymer was prepared according to the method of Example 1, except that the reaction process was replaced with the following process: nitrogen gas was introduced into the reaction kettle for 10min, then vacuumized for 10min, the two operations were circulated for three times to exhaust the air in said reaction kettle; the reaction kettle was heated to 250°C, an opening-ring reaction was performed for 0.5h under the conditions including a rotational speed of 400rpm and a pressure of 0.15MPa; then further heated to 270°C, the pressure of the system was controlled to 1.5MPa by removing redundant water, and the reaction was performed for 2h; the temperature was decreased to 250°C, the system pressure was released, the reaction was continued under normal pressure for 0.5h; the system was vacuumized until the pressure of the system was -0.09MPa, after the reaction was carried out for 1h, the reaction was stopped, the materials were discharged, cooled and sliced to obtain the black nylon-6 polymer.

### Example 17

The black nylon-6 polymer was prepared according to the method of Example 1, except that the reaction process was replaced with the following process: nitrogen gas was introduced into the reaction kettle for 10min, then vacuumized for 10min, the two operations were circulated for three times to exhaust the air in said reaction kettle; the reaction kettle was heated to 200°C, an opening-ring reaction was performed for 0.5h under the conditions including a normal pressure and a rotational speed of 400rpm; then further heated to 220°C, the pressure of the system was controlled to 1.8MPa by removing redundant water, and the reaction was performed for 2.5h; the temperature was decreased to 200°C, the system pressure was released, the reaction was continued under normal pressure for 1.5h; the system was vacuumized until the pressure of the system was -0.09MPa, after the reaction was carried out for 1.5h, the reaction was stopped, the materials were discharged, cooled and sliced to obtain the black nylon-6 polymer.

### Example 18

The black nylon-6 polymer was prepared according to the method of Example 1, except that the reaction process was replaced with the following process: nitrogen gas was introduced into the reaction kettle for 10min, then vacuumized for 10min, the two operations were circulated for three times to exhaust the air in said reaction kettle; the reaction kettle was heated to 230°C, an opening-ring reaction was performed for 0.5h under the conditions including a normal pressure and a rotational speed of 400rpm; then further heated to 265°C, the pressure of the system was controlled to 1.5MPa by removing redundant water, and the reaction was performed for 2.5h; the temperature was decreased to 220°C, the system pressure was released, the reaction was continued under normal pressure for 1.0h; the system was vacuumized until the pressure of the system was -0.02MPa, after the reaction was carried out for 1.5h, the reaction was stopped, the materials were discharged, cooled and sliced to obtain the black nylon-6 polymer.

### Example 19

The black nylon-612 polymer was prepared according to the method of Example 4, except that the reaction process was replaced with the following process: nitrogen gas was introduced into the reaction kettle for 10min, then vacuumized for 10min, the two operations were circulated for three times to exhaust the air in said reaction kettle; the reaction kettle was heated to 245°C in the nitrogen gas atmosphere, the stirring with a rotational speed of 450rpm was started, the system pressure was maintained to 2.00MPa by removing water in said system, the reaction was performed at a constant temperature for 2h; the system pressure was then released to normal pressure (the pressure relief time was about 1.5h); finally, the temperature was further raised to 270°C, the system was vacuumized until the system pressure was -0.06MPa, the reaction was continued for 3h, the reaction was stopped, the stirrer was shut off, the molten mass in the reaction kettle was poured out, cooled to room temperature, and sliced to obtain the black nylon-612 polymer.

### Example 20

The black nylon-612 polymer was prepared according to the method of Example 4, except that the reaction process was replaced with the following process: nitrogen gas was introduced into the reaction kettle for 10min, then vacuumized for 10min, the two operations were circulated for three times to exhaust the air in said reaction kettle; the reaction kettle was heated to 220C in the nitrogen gas atmosphere, the stirring with a rotational speed of 450rpm was started, the system pressure was maintained to 1.80MPa by removing water in said system, the reaction was performed at a constant temperature for 2h; the system pressure was then released to normal pressure (the pressure relief time was about 1.5h); finally, the temperature was further raised to 230°C, the system was vacuumized until the system pressure was -0.02MPa, the reaction was continued for 3h, the reaction was stopped, the stirrer was shut off, the molten mass in the reaction kettle was poured out, cooled to room temperature, and sliced to obtain the black nylon-612 polymer.

### Example 21

The black nylon-6 polymer was prepared according to the method of Example 1, except that the dosage of said benzoic acid was replaced with 5g.

### Example 22

The black nylon-6 polymer was prepared according to the method of Example 1, except that the dosage of said dye condensate 1-1 was replaced with 5g.

### Example 23

The black nylon-66 polymer was prepared according to the method of Example 2, except that the dosage of said nylon-66 salt was replaced with 3,000g, and the dosage of said dye condensate 1-2 was replaced with 2.5g.

### Example 24

1,530g of p-phenylene terephthalamide (PPTA monomer), 12.8g of dye condensate 1-1 prepared in Preparation Example 1, and 102mL of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C in the nitrogen gas atmosphere, the stirring with a rotational speed of 450rpm was started, the system pressure was maintained to 1.80MPa by removing water in said system, the reaction was performed at a constant temperature for 2h; the system pressure was then released to normal pressure (the pressure relief time was about 1.5h); finally, the temperature was further raised to 270°C, the system was vacuumized until the system pressure was -0.06MPa, the reaction was continued for 3h, the reaction was stopped, the stirrer was shut off, the molten mass in the reaction kettle was poured out, cooled to room temperature, and sliced to obtain the black aromatic nylon product.

### Comparative Example 1

The alcohol-soluble aniline black was used as a dye, and nylon-6 was dyed by a dip-dyeing mode, wherein the specific process comprises the following steps: by performing the procedures such as inputting a belt, installing a colouring tank, vaporizing with a hot steamer, then washing with water, drying, and dropping the belt, such that the dye molecules were fully reacted with corresponding functional groups in nylon-6; and finally, the dye molecules which did not react completely were removed and fully decomposed through water washing and drying, the black nylon was obtained.

### Comparative Example 2

The black nylon was prepared according to the method of Comparative Example 1, except that the nylon 6 was replaced with the nylon-66.

### Comparative Example 3

The black nylon was prepared according to the method of Comparative Example 1, except that the nylon 6 was replaced with the nylon-1010.

### Comparative Example 4

The black nylon was prepared according to the method of Comparative Example 1, except that the nylon 6 was replaced with the nylon-612.

### Comparative Example 5

106 parts by weight of m-phenylene diamine and 4.8 parts by weight of 1,5-diaminoanthraquinone were dissolved in 950 parts by weight of dimethylacetamide; the solution was cooled to at least 25°C, 203 parts by weight of a solution of m-phenylenedichloride was further added, the temperature was raised to 40-45°C, the solution became increasingly viscous, then cooled to room temperature with the aid of an ice bath and stirred at this temperature for several hours; hydrochloric acid formed during the reaction process was removed with 10 parts by weight of calcium carbonate and 104 parts by weight of epoxy propane, the solution was then subjected to dry and slicing.

The content of halogen ions in a boiling solution of nylon slices obtained in Comparative Example 5 was 154ppm.

### Comparative Example 6

106 parts by weight of 1,6-hexamethylenediamine and 4.8 parts by weight of 1,5-diaminoanthraquinone were dissolved in 950 parts by weight of dimethylacetamide; the solution was cooled to at least 25°C, 203 parts by weight of an adipoyl chloride solution was further added, the temperature was raised to 40-45°C, the solution became increasingly viscous, then cooled to room temperature with the aid of an ice bath and stirred at this temperature for several hours; hydrochloric acid formed during the reaction process was removed with 10 parts by weight of calcium carbonate and 104 parts by weight of epoxy propane, the solution was then subjected to dry and slicing.

The content of halogen ions in a boiling solution of nylon slices obtained in Comparative Example 6 was 342ppm.

### Comparative Example 7

Commercially available black nylon-6, black nylon-66, black nylon-1010, black nylon-612, blue nylon 6, and blue nylon 1010 were purchased from Guangzhou Chemical City.

### Test Example 1

The contents of chromogenic structure units in the colored nylon slices prepared in Examples 1-24 and the colored nylon provided in Comparative Examples 1-7 were determined through the nuclear magnetic resonance and infrared spectrum detection respectively. The results were shown in Table 2.

The colored nylon slices prepared in Examples 1-24 and the colored nylons provided in Comparative Examples 1-7 were subjected to the tests with respect to the difference in color depth, colour fastness to perspiration, colour fastness to soap washing, colour fastness to water immersion, chromaticity of supernatant after steaming of an organic solvent, the results were shown in Table 2; when the color of said supernatant obtained after steaming the colored nylon slices prepared in Examples 1-24 was observed by naked eyes, the chromaticity was unchanged, the chromaticity of said supernatant measured by the dilution multiplier method was less than 10, and it exhibited good water resistance and dyeing uniformity; in contrast, the color of supernatant obtained before and after steaming the colored nylon prepared in Comparative Examples 1-4 and commercially available colored nylon was obviously changed, and the chromaticity was high; although the color of supernatant obtained before and after steaming the colored nylon prepared in Comparative Examples 5-6 with an organic solvent was not obviously changed, the boiling solution contained a large amount of residual halogens, and exhibited poor water resistance and dyeing uniformity; in addition, the colored nylon in Comparative Examples 5-6 had the defects such as a long reaction process, a low reaction efficiency, low reaction rate and utilization rate of the dye, a complex product purification process, and the generation of a large amount of sewage containing halogen and dye.

**Table 2**

| No. | Content of chromogenic structure units | Chromaticity of supernatant after steaming of an organic solvent | Difference in color depth Sr | Colour fastness to perspiration | Colour fastness to soap washing | Colour fastness to water immersion |
|---|---|---|---|---|---|---|
| Example 1 | 0.69% | 5 | 0.06 | Level 4-5 | Level 4-5 | Level 4-5 |
| Example 2 | 0.55% | 5 | 0.05 | Level 4-5 | Level 4-5 | Level 4-5 |
| Example 3 | 0.90% | 10 | 0.05 | Level 4-5 | Level 4-5 | Level 4-5 |
| Example 4 | 0.80% | 10 | 0.07 | Level 4-5 | Level 4-5 | Level 4-5 |
| Example 5 | 0.81% | 10 | 0.09 | Level 4-5 | Level 4-5 | Level 4-5 |
| Example 6 | 0.70% | 10 | 0.07 | Level 4-5 | Level 4-5 | Level 4-5 |
| Example 7 | 0.54% | 5 | 0.08 | Level 4-5 | Level 4-5 | Level 4-5 |
| Example 8 | 0.89% | 10 | 0.11 | Level 4-5 | Level 4-5 | Level 4-5 |
| Example 9 | 0.80% | 10 | 0.15 | Level 4-5 | Level 4-5 | Level 4-5 |
| Example 10 | 0.81% | 10 | 0.12 | Level 4-5 | Level 4-5 | Level 4-5 |
| Example 11 | 0.55% | 10 | 0.15 | Level 4-5 | Level 4-5 | Level 4-5 |
| Example 12 | 0.81% | 5 | 0.17 | Level 4-5 | Level 4-5 | Level 4-5 |
| Example 13 | 0.81% | 10 | 0.13 | Level 4-5 | Level 4-5 | Level 4-5 |
| Example 14 | 0.81% | 10 | 0.05 | Level 4-5 | Level 4-5 | Level 4-5 |
| Example 15 | 0.78% | 10 | 0.12 | Level 4-5 | Level 4-5 | Level 4-5 |
| Example 16 | 0.69% | 5 | 0.15 | Level 4-5 | Level 4-5 | Level 4-5 |
| Example 17 | 0.69% | 5 | 0.15 | Level 4-5 | Level 4-5 | Level 4-5 |
| Example 18 | 0.69% | 5 | 0.16 | Level 4-5 | Level 4-5 | Level 4-5 |
| Example 19 | 0.80% | 10 | 0.13 | Level 4-5 | Level 4-5 | Level 4-5 |
| Example 20 | 0.80% | 10 | 0.16 | Level 4-5 | Level 4-5 | Level 4-5 |
| Example 21 | 0.69% | 5 | 0.14 | Level 4-5 | Level 4-5 | Level 4-5 |
| Example 22 | 0.31% | 5 | 0.17 | Level 4-5 | Level 4-5 | Level 4-5 |
| Example 23 | 0.08% | 10 | 0.13 | Level 4-5 | Level 4-5 | Level 4-5 |
| Example 24 | 0.80% | 10 | 0.08 | Level 4-5 | Level 4-5 | Level 4-5 |
| Comparative Example 1 | 0.93% | Black, 300 | 0.59 | Level 3-4 | Level 3-4 | Level 3-4 |
| Comparative Example 2 | 0.80% | Black, 200 | 0.58 | Level 3-4 | Level 3-4 | Level 3-4 |
| Comparative Example 3 | 0.75% | Black, 300 | 0.56 | Level 3-4 | Level 3-4 | Level 3-4 |
| Comparative Example 4 | 0.73% | Black, 200 | 0.55 | Level 3-4 | Level 3-4 | Level 3-4 |
| Comparative Example 5 | 0.13% | 50 | 0.49 | Level 3-4 | Level 3-4 | Level 2-3 |
| Comparative Example 6 | 0.17% | 50 | 0.47 | Level 3-4 | Level 3-4 | Level 2-3 |
| Commercially available black nylon-6 | 0.73% | Black, 400 | 0.41 | Level 3-4 | Level 3-4 | Level 3-4 |
| Commercially available black nylon-66 | 0.84% | Black, 400 | 0.36 | Level 3-4 | Level 3-4 | Level 3-4 |
| Commercially available black nylon-1010 | 0.57% | Black, 500 | 0.35 | Level 3-4 | Level 3-4 | Level 3-4 |
| Commercially available black nylon-612 | 0.67% | Black, 300 | 0.41 | Level 3-4 | Level 3-4 | Level 3-4 |
| Commercially available blue nylon-6 | 0.87% | Blue, 300 | 0.43 | Level 3-4 | Level 3-4 | Level 3-4 |
| Commercially available blue nylon-1010 | 0.72% | Blue, 400 | 0.47 | Level 3-4 | Level 3-4 | Level 3-4 |

Wherein the nylon monomers in Examples 1-24 did not contain chlorine element, and the halogen ions were not generated in the whole reaction process, thus the boiling solution corresponding to the nylon products produced with the preparation method provided by the invention did not contain free halogen ion, the nylon products steamed with an organic solvent did not exhibit the decolorization phenomenon, and had excellent properties such as uniform dyeing, desirable stability, high color fastness, colour fastness to perspiration, colour fastness to soap washing, and colour fastness to water immersion.

### Preparation Example 15

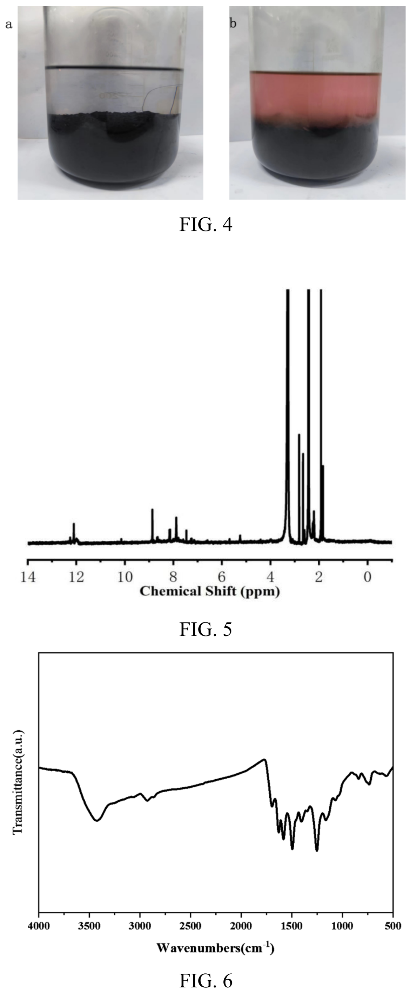

10.0g of 1,4-diaminoanthraquinone and 78.5g of adipic acid were sequentially adding into a reactor, heated to 240°C in a nitrogen gas atmosphere, the reaction under normal pressure was performed for 3h, the reactor was then vacuumized to a pressure of -0.05MPa, the reaction was continued at 240°C for 4h, stirring was stopped, a reaction solution was obtained, the reaction solution was poured into a 250mL beaker, cooled to room temperature, 100mL of water was added into the beaker, boiling and extracting were performed, an extract liquor was then subjected to drying to obtain a condensate 2-1, its structural formula was shown in Table 3, the ¹H NMR spectrogram was illustrated in FIG. 5, the infrared spectrogram was illustrated in FIG. 6, the specific ¹H NMR data was as follows:
¹H NMR (400 MHz, DMSO): δ12.18 (s, 2H), 8.94-8.92 (m, 2H), 8.26 -8.22 (m, 1H), 7.92-7.87 (m, 2H), 7.53-7.52 (m, 1H), 2.74-2.72 (t, 4H), 2.29-2.27 (t, 4H), 1.65-1.57 (m, 8H).

### Preparation Example 16

12.5g of 1,2-diaminoanthraquinone and 1.52g of dodecanedioic acid were sequentially added into a reactor, heated to 230°C in a nitrogen gas atmosphere, the reaction under a pressure of 0.08MPa was performed for 4h, the reactor was then vacuumized to a pressure of -0.06MPa, the reaction was continued at 230°C for 3h, stirring was stopped, a reaction solution was obtained, the reaction solution was poured into a 250mL beaker, cooled to room temperature, 125mL of methanol was added into the beaker, heating and extracting were performed, an extract liquor was then subjected to drying to obtain a condensate 2-2, its structural formula was shown in Table 3, the ¹H NMR data was as follows:
¹H NMR (400 MHz, DMSO): δ8.35-8.29 (m, 6H), 8.04-7.95 (m, 2H), 7.58-7.51 (m, 2H), 7.19 -7.06 (m, 2H), 2.53-2.35 (t, 4H), 1.53-1.40 (t, 4H), 1.41-1.35 (m, 6H), 1.33-1.25(m, 6H).

### Preparation Example 17

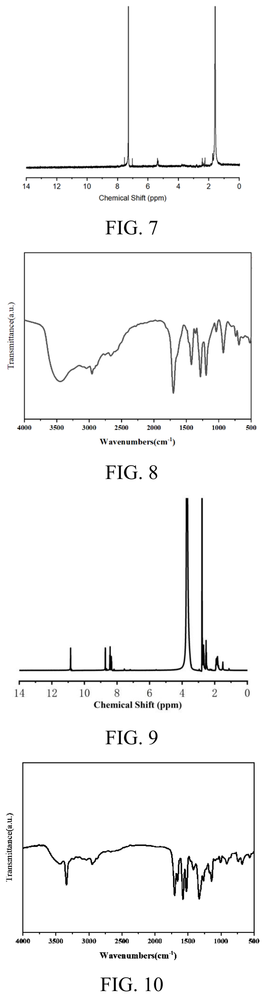

15.8g of C.I. disperse blue-56 and 0.58g of adipic acid were sequentially added into a reactor, heated to 250°C in a nitrogen gas atmosphere, the reaction under a pressure condition of 0.12MPa was performed for 3h, the reactor was then vacuumized to a pressure of -0.03MPa, the reaction was continued at 250°C for 4h, stirring was stopped, a reaction solution was obtained, the reaction solution was poured into a 250mL beaker, cooled to room temperature, 142mL of methanol was added into the beaker, heating and extracting were performed, an extract liquor was then subjected to drying to obtain a condensate 2-3, its structural formula was shown in Table 3, the ¹H NMR spectrogram was illustrated in FIG. 7, the infrared spectrogram was illustrated in FIG. 8, the ¹H NMR data was as follows:
¹H NMR (400MHz, CDCl₃): δ7.58-7.54 (m, 2H), 7.32-7.30 (m, 2H), 7.05-7.02 (m, 2H), 5.35 (s, 4H), 2.46-2.44 (t,2H), 2.27-2.24 (t,2H), 1.76-1.73 (m,4H).

### Preparation Example 18

13.0g of 1-aminoanthraquinone and 92.3g of glutaric acid were sequentially added into a reactor, heated to 235°C in a nitrogen gas atmosphere, the reaction under a normal pressure was performed for 5h, the reactor was then vacuumized to a pressure of -0.05MPa, the reaction was continued at 235°C for 2h, stirring was stopped, a reaction solution was obtained, the reaction solution was poured into a 250mL beaker, cooled to room temperature, 220mL of ethanol was added into the beaker, heating and extracting were performed, a condensate 2-4 was obtained, its structural formula was shown in Table 4, the ¹H NMR data was as follows:
¹H NMR (400MHz, DMSO):δ12.01 (s, 1H), 8.35-8.26 (m, 3H), 7.91-7.84 (m, 2H), 7.69-7.63 (m, 2H), 2.41-2.30 (t, 4H), 2.43-2.10 (m, 2H).

### Preparation Example 19

10.4g of adipic acid was added into a reactor, ethanol was added for dissolving, heated to 60°C, 8.5g of 1,4-diaminoanthraquinone was weighed and dissolved in ethanol, and dropwise added into the reactor, after the dropwise adding was finished, the reaction was performed under a normal pressure and a constant temperature for 3h, the ethanol was removed by rotary evaporation, a condensation salt was obtained by drying, deionized water was added for dissolving the condensation salt to prepare an aqueous condensation salt solution with a concentration of 40wt%, the solution was heated to 230°C under a nitrogen gas environment, the reaction was performed under a normal pressure for 5h, the reactor was vacuumized to a pressure of -0.05MPa, the reaction was finished after continuing the reaction for 5h, and the reaction liquid was cooled to room temperature, the reaction liquid was filtered, the precipitate was then washed with 30mL of methanol, and subjected to drying to obtain a condensate 2-5, wherein the structural formula of the condensate 2-5 was determined through nuclear magnetic resonance and infrared detection, the structural formula was shown in Table 3 and was the same as that of the condensate 2-1.

### Preparation Example 20

12.7g of sebacic acid was added into a reactor, ethanol was added for dissolving, heated to 50°C, 10g of 1,4-diaminoanthraquinone was weighed and dissolved in ethanol, and dropwise added into the reactor, after the dropwise adding was finished, the reaction was performed under a pressure condition of 0.08MPa and a constant temperature for 3h, the ethanol was removed by rotary evaporation, a condensation salt was obtained by drying, deionized water was added for dissolving the condensation salt to prepare an aqueous condensation salt solution with a concentration of 50wt%, the solution was heated to 250°C under a nitrogen gas environment, the reaction was performed under a pressure condition of 0.08MPa for 5h, the reactor was vacuumized to a pressure of -0.07MPa, the reaction was finished after continuing the reaction for 4h, and the reaction liquid was cooled to room temperature, the reaction liquid was filtered, the precipitate was then washed with 68mL of methanol, and subjected to drying to obtain a condensate 2-6, its structural formula was shown in Table 3, the ¹H NMR data was as follows:
¹H NMR (400MHz, DMSO): δ12.12 (s, 2H),8.95-8.91 (m, 4H), 8.24-8.19 (m, 2H), 8.04-7.92 (m, 4H), 7.55-7.53 (m, 2H), 2.36-2.24 (t,8H), 2.23-2.16 (t,4H), 1.57-1.41 (m,12H),1.35-1.22 (m,12H),1.19-1.10 (m,12H).

### Preparation Example 21

15.7g of adipic acid was added into a reactor, ethanol was added for dissolving, heated to 70°C, 12.8g of 2,6-diaminoanthraquinone was weighed and dissolved in ethanol, and dropwise added into the reactor, after the dropwise adding was finished, the reaction was performed under a pressure condition of 0.12MPa and a constant temperature for 4h, the ethanol was removed by rotary evaporation, a condensation salt was obtained by drying, deionized water was added for dissolving the condensation salt to prepare an aqueous condensation salt solution with a concentration of 60wt%, the solution was heated to 200°C under a nitrogen gas environment, the reaction was performed under a pressure condition of 0.12MPa for 3h, the reactor was vacuumized to a pressure of -0.07MPa, the reaction was finished after continuing the reaction for 6h, and the reaction liquid was cooled to room temperature, the reaction liquid was filtered, the precipitate was then washed with 100mL of deionized water, and subjected to drying to obtain a condensate 2-7, its structural formula was shown in Table 3, the ¹H NMR spectrogram was illustrated in FIG. 9, the infrared spectrogram was illustrated in FIG. 10, the ¹H NMR data was as follows:
¹H NMR (400 MHz, DMSO): δ12.15 (s, 2H), 8.86-8.83 (m, 2H), 8.49-8.42 (m, 4H), 2.74-2.72 (t, 4H), 2.29-2.27 (t, 4H), 1.65-1.57 (m, 8H).

### Preparation Example 22

9.9g of isophthalic acid was added into a reactor, ethanol was added for dissolving, heated to 60°C, 9.5g of 1,2-diaminoanthraquinone was weighed and dissolved in ethanol, and dropwise added into the reactor, after the dropwise adding was finished, the reaction was performed under a pressure condition of 0.08MPa and a constant temperature for 5h, the ethanol was removed by rotary evaporation, a condensation salt was obtained by drying, deionized water was added for dissolving the condensation salt to prepare an aqueous condensation salt solution with a concentration of 50wt%, the solution was heated to 230°C under a nitrogen gas environment, the reaction was performed under a pressure condition of 0.12MPa for 3h, the reactor was vacuumized to a pressure of -0.06MPa, the reaction was finished after continuing the reaction for 5h, and the reaction liquid was cooled to room temperature, the reaction liquid was filtered, the precipitate was then washed with 80mL of deionized water, and subjected to drying to obtain a condensate 2-8, its structural formula was shown in Table 3, the ¹H NMR data was as follows:
¹H NMR (400MHz, DMSO): δ12.71 (s, 2H), 68.45-8.40 (m, 3H), δ8.35-8.29 (m, 6H), δ8.26-8.23 (m, 3H), 8.16-8.14 (m, 3H), 8.04-7.95 (m, 2H), 7.69-7.67 (m, 3H), 7.58-7.51 (m, 2H), 7.19 -7.06 (m, 2H).

### Preparation Example 23

The condensate 2-1 was prepared according to the method of Preparation Example 15, except that the reaction process was replaced by the following process:
The reactor was heated to 270°C in a nitrogen gas atmosphere, the reaction under a pressure of 0.10MPa was performed for 3h, the reactor was then vacuumized to a pressure of -0.05MPa, the reaction was continued at 240°C for 4h, stirring was stopped, a reaction solution was obtained.

### Preparation Example 24

The condensate 2-1 was prepared according to the method of Preparation Example 15, except that the reaction process was replaced by the following process:
The reactor was heated to 240°C in a nitrogen gas atmosphere, the reaction under normal pressure was performed for 3h, the reactor was then vacuumized to a pressure of -0.05MPa, the reaction was continued at 250°C for 1h, stirring was stopped, a reaction solution was obtained

### Preparation Example 25

The condensate 2-5 was prepared according to the method of Preparation Example 19, except that the reaction process was replaced by the following process:
10.4g of adipic acid was added into a reactor, ethanol was added for dissolving, heated to 40°C, 8.5g of 1,4-diaminoanthraquinone was weighed and dissolved in ethanol, and dropwise added into the reactor, after the dropwise adding was finished, the reaction was performed under a pressure of 0.11MPa and a constant temperature for 3h, the ethanol was removed by rotary evaporation, a condensation salt was obtained by drying, deionized water was added for dissolving the condensation salt to prepare an aqueous condensation salt solution with a concentration of 40wt%, the solution was heated to 230°C under a nitrogen gas environment, the reaction was performed under a normal pressure for 5h, the reactor was vacuumized to a pressure of -0.05MPa, the reaction was finished after continuing the reaction for 5h.

### Preparation Example 26

The condensate 2-5 was prepared according to the method of Preparation Example 19, except that the reaction process was replaced by the following process:
10.4g of adipic acid was added into a reactor, ethanol was added for dissolving, heated to 60°C, 8.5g of 1,4-diaminoanthraquinone was weighed and dissolved in ethanol, and dropwise added into the reactor, after the dropwise adding was finished, the reaction was performed under a normal pressure and a constant temperature for 6h, the ethanol was removed by rotary evaporation, a condensation salt was obtained by drying, deionized water was added for dissolving the condensation salt to prepare an aqueous condensation salt solution with a concentration of 40wt%, the solution was heated to 240°C under a nitrogen gas environment, the reaction was performed under a pressure of 0.09MPa for 5h, the reactor was vacuumized to a pressure of -0.05MPa, the reaction was finished after continuing the reaction for 5h.

**Table 3 Structural formulae of condensate in Preparation Examples**

| No. | Structural formulae of condensate | m and number Xn of structure units |
|---|---|---|
| Preparation Example 15 | 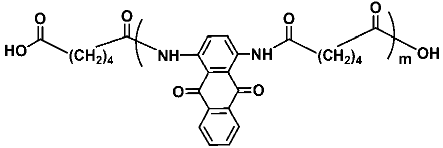 | 1, 3 |
| Preparation Example 16 | 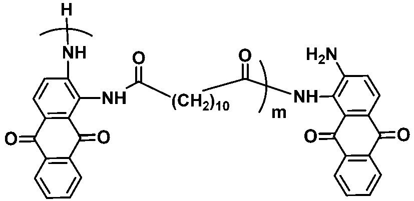 | 1, 3 |
| Preparation Example 17 | 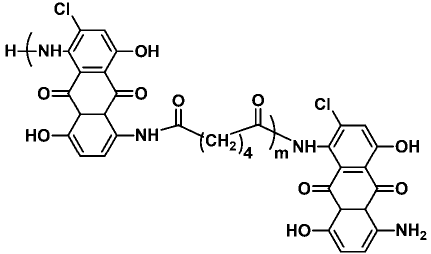 | 1, 3 |
| Preparation Example 18 | 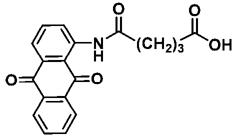 | 2 |
| Preparation Example 19 | 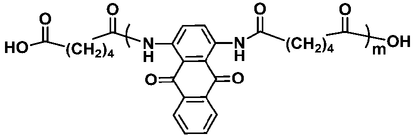 | 1, 3 |
| Preparation Example 20 | 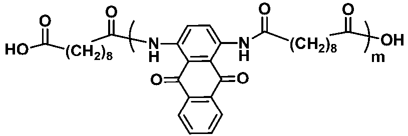 | 2, 5 |
| Preparation Example 21 | 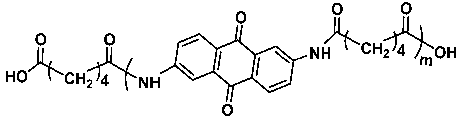 | 1, 3 |
| Preparation Example 22 | 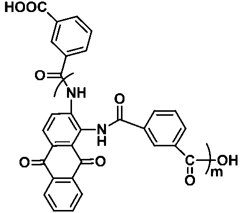 | 2, 5 |

In Table 3, Xn denoted the number of structure units forming the condensate, for example, the number of structure units of A-(B-A)₁ was 3, the number of structure units of A-(B-A)₂ was 5, and the number of structure units of C-D was 2.

### Example 25

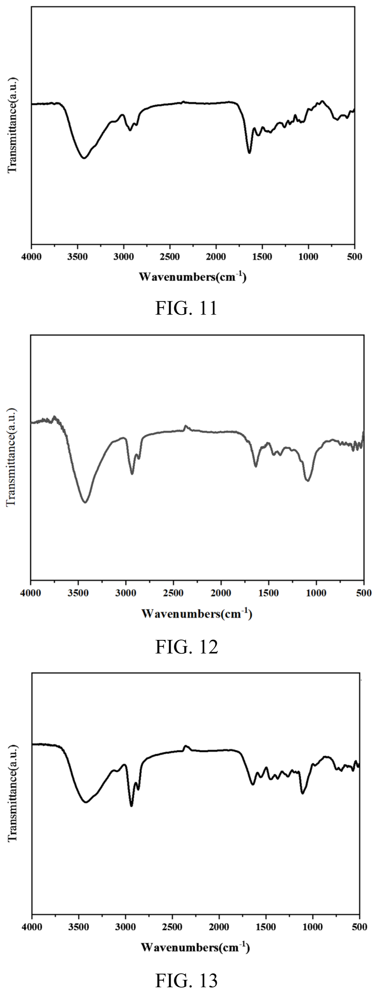

1,650g of caprolactam, 9.9g of benzoic acid, 1.28g of condensate 2-7 and 82.5mL of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 200°C, an opening-ring reaction was performed for 0.5h under the normal pressure and the stirring condition with a rotational speed of 400 rpm; then further heated to 270°C, the pressure of the system was controlled to 1.2MPa by removing redundant water, and the reaction was performed for 2.5h; the temperature was decreased to 250°C, the system pressure was released, the reaction was continued under normal pressure for 1.5h; the system was vacuumized until the pressure of the system was -0.08MPa, after the reaction was carried out for 2h, the reaction was stopped, a reaction liquid in a molten state was obtained, the reaction liquid was subjected to cooling and slicing to obtain a yellow nylon-6 polymer slice, its infrared detection spectrogram was shown in FIG. 11, a stretching vibration peak of the group =C-H was presented near 3085cm⁻¹, and a stretching vibration peak of a benzene nucleus skeleton was presented at the vicinity of 1553cm⁻¹.

### Example 26

2,000g of nylon-66 salt, 11.8g of adipic acid, 1.78g of condensate 2-7 and 152ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 200°C in a nitrogen gas atmosphere, the stirring was performed at a rotational speed of 450 rpm, the pressure of the system was maintained to 1.8MPa by removing water in the system, and the reaction was performed at a constant temperature for 3.5h; the system pressure was then released to a normal pressure, the system was heated to 270°C; the system was vacuumized until the pressure of the system was -0.09MPa, after the reaction was carried out for 2.5h, the reaction was stopped, a reaction liquid in a molten state was obtained, the stirrer was shut off, the molten reaction liquid in the reaction kettle was poured out, cooled to room temperature, and sliced to obtain the yellow nylon-66 polymer slices.

### Example 27

1,250g of nylon-1010 salt, 2.92g of adipic acid, 1.39g of condensate 2-7 and 115ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 215°C in a nitrogen gas atmosphere, the stirring was performed at a rotational speed of 400 rpm, the pressure of the system was maintained to 1.7MPa by removing water in the system, and the reaction was performed at a constant temperature for 2h; the system pressure was then released to a normal pressure, the system was heated to 270°C; the system was vacuumized until the pressure of the system was -0.07MPa, after the reaction was carried out for 3h, the reaction was stopped, a reaction liquid in a molten state was obtained, the stirrer was shut off, the molten reaction liquid in the reaction kettle was poured out, cooled to room temperature, and sliced to obtain the yellow nylon-1010 polymer slices.

### Example 28

1,500g of nylon-612 salt, 4.59g of adipic acid, 18.75g of condensate 2-7 and 85ml of deionized water were into a reaction kettle, nitrogen gas was introduced into the reaction kettle for 10min, then vacuumized for 10min, the two operations were circulated for three times to exhaust the air in said reaction kettle; the reaction kettle was heated to 220°C in a nitrogen gas atmosphere, the stirring was performed at a rotational speed of 450 rpm, the pressure of the system was maintained to 1.8MPa by removing water in the system, and the reaction was performed at a constant temperature for 2.5h; the system pressure was then released to a normal pressure, the system was heated to 225°C; the system was vacuumized until the pressure of the system was -0.09MPa, after the reaction was carried out for 2.5h, the reaction was stopped, a reaction liquid in a molten state was obtained, the stirrer was shut off, the molten reaction liquid in the reaction kettle was poured out, cooled to room temperature, and sliced to obtain the yellow nylon-612 polymer slices.

### Example 29

1,125g of caprolactam, 10.1g of benzoic acid, 22.5g of condensate 2-6 and 63.2ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 230°C, an open-ring reaction was performed for 0.5h under a pressure of 0.12MPa and the stirring condition with a rotational speed of 400 rpm, the temperature was raised to 260°C, the pressure of the system was controlled to 1.5MPa by removing redundant water, the reaction was performed for 2.5h; the temperature was decreased to 240°C, the system pressure was released, the reaction was continued under the pressure of 0.12MPa for 1.5h; the system was vacuumized until the pressure of the system was -0.09MPa, after the reaction was carried out for 2h, the reaction was stopped, a reaction liquid in a molten state was obtained, the reaction liquid was subjected to cooling and slicing to obtain the brown nylon-6 polymer slices.

### Example 30

1,300g of nylon-66 salt, 4.20g of adipic acid, 0.9g of condensate 2-6 and 138ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 230°C in a nitrogen gas atmosphere, the stirring was performed at a rotational speed of 500 rpm, the pressure of the system was maintained to 1.5MPa by removing water in the system, and the reaction was performed at a constant temperature for 4h; the system pressure was then released to a normal pressure, the system was heated to 250°C; the system was vacuumized until the pressure of the system was -0.06MPa, after the reaction was carried out for 1h, the reaction was stopped, a reaction liquid was obtained, the stirrer was shut off, the molten reaction liquid in the reaction kettle was poured out, cooled to room temperature, and sliced to obtain the brown nylon-66 polymer slices.

### Example 31

1,000g of caprolactam, 7.30g of benzoic acid, 2.25g of condensate 2-3 and 50ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C, an opening-ring reaction was performed for 1h under the pressure of 0.08MPa and the stirring condition with a rotational speed of 450 rpm; then further heated to 245°C, the pressure of the system was controlled to 1.3MPa by removing redundant water, and the reaction was performed for 3.5h; the temperature was decreased to 235°C, the system pressure was released, the reaction was continued under the pressure of 0.08MPa for 1.0h; the system was vacuumized until the pressure of the system was -0.08MPa, after the reaction was carried out for 1.5h, the reaction was stopped, a reaction liquid in a molten state was obtained, the reaction liquid was subjected to cooling and slicing to obtain the black nylon-6 polymer slices, its infrared detection spectrogram was shown in FIG. 12, a stretching vibration peak of the group =C-H was presented near 3085cm⁻¹, and a stretching vibration peak of a benzene nucleus skeleton was presented at the vicinity of 1553cm⁻¹.

### Example 32

1,560g of nylon-1010 salt, 4.09g of adipic acid, 1.77g of condensate 2-3 and 104.0ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 230°C in a nitrogen gas atmosphere, the stirring was performed at a rotational speed of 400 rpm, the pressure of the system was maintained to 1.38MPa by removing water in the system, and the reaction was performed at a constant temperature for 4h; the system pressure was then released to a normal pressure, the system was heated to 270°C; the system was vacuumized until the pressure of the system was -0.09MPa, after the reaction was carried out for 2.5h, the reaction was stopped, a reaction liquid in a molten state was obtained, the stirrer was shut off, the molten reaction liquid in the reaction kettle was poured out, cooled to room temperature, and sliced to obtain the black nylon-1010 polymer slices.

### Example 33

1,500.0g of caprolactam, 8.10g of benzoic acid, 10.82g of condensate 2-4 and 68.2ml of deionized water were into a reaction kettle, nitrogen gas was introduced into the reaction kettle for 10min, then vacuumized for 10min, the two operations were circulated for three times to exhaust the air in said reaction kettle; the reaction kettle was heated to 230°C, an open-ring reaction was performed for 0.5h under a normal pressure and the stirring condition with a rotational speed of 400 rpm, the temperature was raised to 250°C, the pressure of the system was controlled to 1.5MPa by removing redundant water, the reaction was performed for 2.5h; the temperature was decreased to 240°C, the system pressure was released, the reaction was continued under a normal pressure for 1.0h; the system was vacuumized until the pressure of the system was -0.09MPa, after the reaction was carried out for 1.5h, the reaction was stopped, a reaction liquid in a molten state was obtained, the reaction liquid was subjected to cooling and slicing to obtain the orange nylon-6 polymer slices.

### Example 34

1,530.0g of nylon-612 salt, 6.58g of adipic acid, 12.8g of condensate 2-4 and 102.0ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C in a nitrogen gas atmosphere, the stirring was performed at a rotational speed of 450 rpm, the pressure of the system was maintained to 1.80MPa by removing water in the system, and the reaction was performed at a constant temperature for 2h; the system pressure was then released to a normal pressure, the system was heated to 270°C; the system was vacuumized until the pressure of the system was -0.06MPa, after the reaction was continued for 3h, the reaction was stopped, a reaction liquid in a molten state was obtained, the stirrer was shut off, the molten reaction liquid in the reaction kettle was poured out, cooled to room temperature, and sliced to obtain the orange nylon-612 polymer slices.

### Example 35

The yellow nylon-6 polymer slices were prepared with the method of Example 25, except that the dosage of benzoic acid was replaced by 5.2 g.

### Example 36

The yellow nylon-6 polymer slices were prepared with the method of Example 25, except that the dosage of benzoic acid was replaced by 4.5 g.

### Example 37

The yellow nylon-66 polymer slices were prepared with the method of Example 26, except that the dosage of nylon-66 salt was replaced by 3,000 g.

### Example 38

The yellow nylon-6 polymer slices were prepared with the method of Example 25, except that the reaction process was replaced with the following process:
Nitrogen gas was introduced into the reaction kettle for 10min, then vacuumized for 10min, the two operations were circulated for three times to exhaust the air in said reaction kettle; the reaction kettle was heated to 280°C, an opening-ring reaction was performed for 1.5h under the pressure of 0.11MPa and the stirring condition with a rotational speed of 400 rpm; then heated to 270°C, the pressure of the system was controlled to 1.2MPa by removing redundant water, and the reaction was performed for 2.5h; the temperature was decreased to 250°C, the system pressure was released, the reaction was continued under normal pressure for 1.5h; the system was vacuumized until the pressure of the system was -0.08MPa, after the reaction was carried out for 2h, the reaction was stopped, a reaction liquid was obtained.

### Example 39

The yellow nylon-6 polymer slices were prepared with the method of Example 25, except that the reaction process was replaced with the following process:
Nitrogen gas was introduced into the reaction kettle for 10min, then vacuumized for 10min, the two operations were circulated for three times to exhaust the air in said reaction kettle; the reaction kettle was heated to 200°C, an opening-ring reaction was performed for 0.5h under a normal pressure and the stirring condition with a rotational speed of 400 rpm; then heated to 250°C, the pressure of the system was controlled to 1.4MPa by removing redundant water, and the reaction was performed for 2.5h; the temperature was decreased to 240°C, the system pressure was released, the reaction was continued under normal pressure for 0.5h; the system was vacuumized until the pressure of the system was -0.08MPa, after the reaction was carried out for 0.5h, the reaction was stopped, a reaction liquid was obtained.

### Example 40

The yellow nylon-6 polymer slices were prepared with the method of Example 25, except that the reaction process was replaced with the following process:
Nitrogen gas was introduced into the reaction kettle for 10min, then vacuumized for 10min, the two operations were circulated for three times to exhaust the air in said reaction kettle; the reaction kettle was heated to 200°C, an opening-ring reaction was performed for 0.5h under a normal pressure and the stirring condition with a rotational speed of 400 rpm; then heated to 270°C, the pressure of the system was controlled to 1.2MPa by removing redundant water, and the reaction was performed for 2.5h; the temperature was decreased to 260°C, the system pressure was released, the reaction was continued under normal pressure for 1.5h; the system was vacuumized until the pressure of the system was -0.08MPa, after the reaction was carried out for 2h, the reaction was stopped, a reaction liquid was obtained.

### Example 41

The yellow nylon-6 polymer slices were prepared with the method of Example 25, except that the reaction process was replaced with the following process:
nitrogen gas was introduced into the reaction kettle for 10min, then vacuumized for 10min, the two operations were circulated for three times to exhaust the air in said reaction kettle; the reaction kettle was heated to 200°C, an opening-ring reaction was performed for 0.5h under a normal pressure and the stirring condition with a rotational speed of 400 rpm; then heated to 270°C, the pressure of the system was controlled to 1.2MPa by removing redundant water, and the reaction was performed for 2.5h; the temperature was decreased to 220°C, the system pressure was released, the reaction was continued under normal pressure for 1.5h; the system was vacuumized until the pressure of the system was -0.06MPa, after the reaction was carried out for 2h, the reaction was stopped, a reaction liquid was obtained.

### Example 42

The yellow nylon-66 polymer slices were prepared with the method of Example 26, except that the reaction process was replaced with the following process:
Nitrogen gas was introduced into the reaction kettle for 10min, then vacuumized for 10min, the two operations were circulated for three times to exhaust the air in said reaction kettle; the reaction kettle was heated to 220°C under a nitrogen gas atmosphere, the stirring was performed at a rotational speed of 450 rpm, the pressure of the system was maintained to 2.1MPa by removing water in the system, and the reaction was performed at a constant temperature for 3.5h; the system pressure was then released to a normal pressure, the system was heated to 270°C; the system was vacuumized until the pressure of the system was -0.09MPa, after the reaction was carried out for 2.5h, the reaction was stopped, a reaction liquid was obtained.

### Example 43

The yellow nylon-66 polymer slices were prepared with the method of Example 26, except that the reaction process was replaced with the following process:
Nitrogen gas was introduced into the reaction kettle for 10min, then vacuumized for 10min, the two operations were circulated for three times to exhaust the air in said reaction kettle; the reaction kettle was heated to 200°C under a nitrogen gas atmosphere, the stirring was performed at a rotational speed of 450 rpm, the pressure of the system was maintained to 1.8MPa by removing water in the system, and the reaction was performed at a constant temperature for 3.5h; the system pressure was then released to a normal pressure, the system was heated to 220°C; the system was vacuumized until the pressure of the system was -0.06MPa, after the reaction was carried out for 2.5h, the reaction was stopped, a reaction liquid was obtained.

### Example 44

The brown nylon-6 polymer slices were prepared according to the method of Example 25, except that condensate 2-7 was replaced with condensate 2-1, its infrared detection spectrum was shown in FIG. 13, a stretching vibration peak of the group =C-H was presented near 3085cm⁻¹, and a stretching vibration peak of a benzene nucleus skeleton was presented at the vicinity of 1553cm⁻¹.

### Example 45

The brown nylon-6 polymer slices were prepared according to the method of Example 25, except that condensate 2-7 was replaced with condensate 2-2.

### Example 46

The brown nylon-66 polymer slices were prepared according to the method of Example 26, except that condensate 2-7 was replaced with condensate 2-5.

### Example 47

The brown nylon-66 polymer slices were prepared according to the method of Example 26, except that condensate 2-7 was replaced with condensate 2-8.

### Example 48

1,530g of p-phenylene terephthalamide (PPTA monomer), 6.58g of adipic acid, 12.8g of condensate 2-7 and 102mL of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C in a nitrogen gas atmosphere, the stirring was started at a rotational speed of 450 rpm, the pressure of the system was maintained to 1.80MPa by removing water in the system, and the reaction was performed at a constant temperature for 2h; the system pressure was then released to a normal pressure (the pressure relief time is about 1.5h), the system was further heated to 270°C, and vacuumized until the pressure of the system was -0.06MPa, the reaction was continued for 3h, the reaction was stopped, the stirrer was shut off, the molten mass in the reaction kettle was poured out, cooled to room temperature, and sliced to obtain the yellow aromatic nylon product.

### Comparative Example 8

The vat yellow GCN prepared with 2,6-diaminoanthraquinone was used as a dye, and nylon-6 was dyed by means of a dip-dyeing mode, the specific process was as follows: an aqueous solution containing 2.5g/L vat yellow GCN, 3g/L sodium hydrosulfite and 2g/L sodium hydroxide was prepared, the temperature was preserved for 40min at the temperature of 20°C to obtain the fully reduced vat dye leuco body; nylon-6 was put into the reduced vat dye leuco body solution in a bath ratio of 1:10, the temperature was preserved at 50°C for 40min, the nylon-6 was washed with water after dyeing was finished, oxidized with hydrogen peroxide solution having a concentration of 1g/L, then subjected to washing with soaping, washing with water, and drying , the yellow nylon was obtained.

### Comparative Example 9

The yellow nylon was prepared according to the method of Comparative Example 8, except that the nylon 6 was replaced with nylon-66.

### Comparative Example 10

The yellow nylon was prepared according to the method of Comparative Example 8, except that the nylon 6 was replaced with nylon-1010.

### Comparative Example 11

The yellow nylon was prepared according to the method of Comparative Example 8, except that the nylon 6 was replaced with nylon-612.

### Comparative Example 12

The black nylon was prepared according to the method of Comparative Example 8, except that vat yellow GCN prepared with 2,6-diaminoanthraquinone was replaced by the disperse blue-56.

### Comparative Example 13

The black nylon was prepared according to the method of Comparative Example 12, except that the nylon 6 was replaced with nylon-1010.

### Comparative Example 14

1,650g of caprolactam, 9.9g of benzoic acid, 1.28g of 2,6-diaminoanthraquinone and 82.5mL of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 200°C, an open-ring reaction was performed for 0.5h under a normal pressure and the stirring condition with a rotational speed of 400 rpm, the temperature was raised to 270°C, the pressure of the system was controlled to 1.2MPa by removing redundant water, the reaction was performed for 2.5h; the temperature was decreased to 250°C, the system pressure was released, the reaction was continued under a normal pressure for 1.5h; the system was vacuumized until the pressure of the system was -0.08MPa, after the reaction was carried out for 2h, the reaction was stopped, a reaction liquid in a molten state was obtained, the reaction liquid was cooled, and then subjected to stretching into strips, cutting into granules, extracting with water, drying and slicing to obtain yellow nylon-6 polymer slices.

### Comparative Example 15

2,000g of nylon-66 salt, 11.8g of adipic acid, 1.78g of 2,6-diaminoanthraquinone and 152ml of deionized water were added into a reaction kettle, nitrogen gas was introduced into the reaction kettle for 10min, then vacuumized for 10min, the two operations were circulated for three times to exhaust the air in said reaction kettle; the reaction kettle was heated to 220°C in a nitrogen gas atmosphere, the stirring was started at a rotational speed of 450 rpm, the pressure of the system was maintained to 1.8MPa by removing water in the system, and the reaction was performed at a constant temperature for 3.5h; the system pressure was then released to a normal pressure, the system was further heated to 270°C, and vacuumized until the pressure of the system was -0.09MPa, the reaction was continued for 2.5h, the reaction was stopped, a reaction liquid in a molten state was obtained, the stirrer was shut off, the molten mass reaction liquid in the reaction kettle was poured out, cooled to room temperature, extracted with water, subjected to drying and slicing to obtain yellow nylon-66 polymer slices.

### Test Example 2

The content of chromogenic structure units in the colored nylon slices prepared in Examples 25-48 and the colored nylon provided in Comparative Examples 8-15 were determined through the nuclear magnetic resonance spectrum and infrared spectrum detection, respectively, the results were shown in Table 4.

Infrared detection was carried out on the colored nylon prepared in Examples 25-48, the infrared spectrogram showed that a stretching vibration peak of the group =C-H was presented near 3085cm⁻¹, and a stretching vibration peak of a benzene nucleus skeleton was presented at the vicinity of 1553cm⁻¹. Infrared detection was carried out on the colored nylon provided by Comparative Examples 8-13, respectively, the characteristic peaks were also presented at the vicinity of 3085cm⁻¹ and 1553cm⁻¹, but the peak values were small, and the characteristic peaks were not obvious.

The colored nylons prepared in Examples 25-48 and the colored nylons provided by Comparative Examples 8-15 were subjected to the tests of difference in color depth, colour fastness to perspiration, colour fastness to soap washing, colour fastness to water immersion, and chromaticity of supernatant after steaming with an organic solvent, respectively, the results were shown in Table 4.

Among them, when the difference in color depth was detected, it was found that the difference in color depth of the yellow nylon-6 slices obtained in Example 25 was significantly smaller than that of the yellow nylon-6 slices obtained in Comparative Example 14, and the difference in color depth of the yellow nylon-66 slices obtained in Example 26 was significantly smaller than that of the yellow nylon-66 slices obtained in Comparative Example 15. It indicated that in the same nylon preparation system, Comparative Example 14 and Comparative Example 15 involved with the direct copolymerization of the dye with a nylon monomer, which not only exhibited the defects such as low reaction efficiency, incomplete reaction of the dye and poor uniformity of the dyeing effect on nylon, but also required water washing after the reaction to remove unreacted dye, and generated a large amount of dye-containing wastewater; Examples 25 and 26 carried out the copolymerization of nylon monomer with the dye in a form of dye condensate, such that the high reactivity ratio effect between the dye chromogenic groups and the nylon monomer can be realized, the dye chromogenic groups were efficiently introduced into the nylon chain segment, the dyeing efficiency was high, the full utilization of the dye was achieved, the dye uniformity was excellent, the stability was high, thus the nylon product was kept with excellent mechanical property and water resistance; the comparison diagrams of the black nylon-6 polymer slices prepared in Example 31 before and after steaming with ethyl acetate were shown in FIG. 3 (the diagrams exhibited a certain color difference, due to different shot rays of light and angles), and the chromaticity of the solution after steaming was extremely low; FIG. 4 showed the comparison diagrams of the black nylon-6 prepared in Comparative Example 12 before and after steaming with ethyl acetate, the color of the supernatant was colorless before steaming with ethyl acetate, and changed into purple color after the steaming, the chromaticity of a supernatant after steaming was significantly increased.

**Table 4**

| No. | Content of chromogenic structure units | Chromaticity of supernatant after steaming of an organic solvent | Difference in color depth Sr | Colour fastness to perspiration | Colour fastness to soap washing | Colour fastness to water immersion |
|---|---|---|---|---|---|---|
| Example 25 | 0.08% | 5 | 0.08 | Level 4-5 | Level 4-5 | Level 4-5 |
| Example 26 | 0.09% | 5 | 0.06 | Level 4-5 | Level 4-5 | Level 4-5 |
| Example 27 | 0.11% | 10 | 0.08 | Level 4-5 | Level 4-5 | Level 4-5 |
| Example 28 | 1.23% | 10 | 0.06 | Level 4-5 | Level 4-5 | Level 4-5 |
| Example 29 | 1.94% | 10 | 0.07 | Level 4-5 | Level 4-5 | Level 4-5 |
| Example 30 | 0.07% | 5 | 0.1 | Level 4-5 | Level 4-5 | Level 4-5 |
| Example 31 | 0.22% | 10 | 0.13 | Level 4-5 | Level 4-5 | Level 4-5 |
| Example 32 | 0.11% | 10 | 0.09 | Level 4-5 | Level 4-5 | Level 4-5 |
| Example 33 | 0.71% | 10 | 0.15 | Level 4-5 | Level 4-5 | Level 4-5 |
| Example 34 | 0.83% | 10 | 0.11 | Level 4-5 | Level 4-5 | Level 4-5 |
| Example 35 | 0.08% | 5 | 0.13 | Level 3-4 | Level 4-5 | Level 3-4 |
| Example 36 | 0.08% | 5 | 0.13 | Level 3-4 | Level 3-4 | Level 3-4 |
| Example 37 | 0.06% | 5 | 0.15 | Level 4-5 | Level 4-5 | Level 3-4 |
| Example 38 | 0.08% | 5 | 0.12 | Level 3-4 | Level 4-5 | Level 3-4 |
| Example 39 | 0.08% | 5 | 0.12 | Level 3-4 | Level 4-5 | Level 4-5 |
| Example 40 | 0.08% | 5 | 0.14 | Level 3-4 | Level 4-5 | Level 4-5 |
| Example 41 | 0.08% | 5 | 0.16 | Level 4-5 | Level 4-5 | Level 3-4 |
| Example 42 | 0.09% | 5 | 0.07 | Level 4-5 | Level 3-4 | Level 3-4 |
| Example 43 | 0.09% | 5 | 0.09 | Level 4-5 | Level 3-4 | Level 4-5 |
| Example 44 | 0.08% | 5 | 0.12 | Level 4-5 | Level 4-5 | Level 4-5 |
| Example 45 | 0.08% | 5 | 0.1 | Level 4-5 | Level 4-5 | Level 4-5 |
| Example 46 | 0.09% | 5 | 0.12 | Level 4-5 | Level 4-5 | Level 4-5 |
| Example 47 | 0.09% | 5 | 0.1 | Level 4-5 | Level 4-5 | Level 4-5 |
| Example 48 | 0.83% | 10 | 0.13 | Level 4-5 | Level 4-5 | Level 4-5 |
| Comparative Example 8 | 0.86% | Yellow, 400 | 0.57 | Level 3-4 | Level 2-3 | Level 3-4 |
| Comparative Example 9 | 0.89% | Yellow, 500 | 0.61 | Level 3-4 | Level 3-4 | Level 3-4 |
| Comparative Example 10 | 0.92% | Yellow, 300 | 0.66 | Level 2-3 | Level 3-4 | Level 3-4 |
| Comparative Example 11 | 0.82% | Yellow, 300 | 0.63 | Level 3-4 | Level 3-4 | Level 2-3 |
| Comparative Example 12 | 0.69% | Purple, 300 | 0.67 | Level 2-3 | Level 3-4 | Level 3-4 |
| Comparative Example 13 | 0.62% | Purple, 400 | 0.59 | Level 3-4 | Level 3-4 | Level 3-4 |
| Comparative Example 14 | 0.04% | 40 | 0.42 | Level 3-4 | Level 2-3 | Level 2-3 |
| Comparative Example 15 | 0.05% | 60 | 0.46 | Level 3-4 | Level 2-3 | Level 2-3 |

As can be seen from the results in Table 4, the colored nylon produced with the preparation method provided by the invention has the advantages such as uniform dyeing, controllable color, desirable stability, high color fastness, excellent colour fastness to perspiration, colour fastness to soap washing, colour fastness to water immersion and other properties, and does not exhibit a decolorization phenomenon after steaming with an organic solvent; the preparation process for colored nylon provided by the invention can avoid the formation of byproducts containing halogen ions, and reduce the energy consumption, water consumption, chemical consumption and wastewater discharge during the dyeing process.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

## Claims

1. A colored nylon, is **characterized in that** the colored nylon comprises nylon structure units and chromogenic structure units, the chromogenic structure units comprise dye chromogenic groups; the chromaticity of a supernatant obtained by steaming a mixture of the colored nylon and an organic solvent in a weight ratio of 1:3 does not exceed 10, and the difference in color depth of the colored nylon does not exceed 0.2.

2. The colored nylon according to claim 1, wherein the content of halogen ions in a boiling solution obtained by steaming a mixture of the colored nylon and deionized water in a weight ratio of 1:1 does not exceed 5ppm.

3. The colored nylon according to claim 1 or 2, wherein the colored nylon has a colour fastness to water immersion being level 4-5, a colour fastness to perspiration being level 4-5, and a colour fastness to soap washing being level 4-5.

4. The colored nylon according to any one of claims 1-3, wherein the dye chromogenic groups are at least one selected from the group consisting of anthraquinone-chromogenic groups, solvent black groups, acid black groups, acid blue groups and acid yellow groups;
preferably, the chromogenic structures units are contained in an amount of 0.2-1.5wt%, based on the weight of said colored nylon.

5. A preparation method for the colored nylon, is **characterized in that** the method comprises: contacting a condensate containing the dye chromogenic groups with a nylon monomer to carry out the condensation reaction, such that at least a part of the dye chromogenic groups are located between and/or at the ends of the structure units formed from the nylon unit.

6. The preparation method according to claim 5, wherein the condensate containing dye chromogenic groups has a structure represented by formula (I), 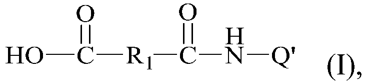 wherein R₁ is aliphatic alkylidene or aromatic alkylidene, and Q' is the dye chromogenic group.

7. The preparation method according to claim 6, wherein the structural formula of the dye chromogenic groups is at least one selected from formula (II), formula (III) and formula (IV), 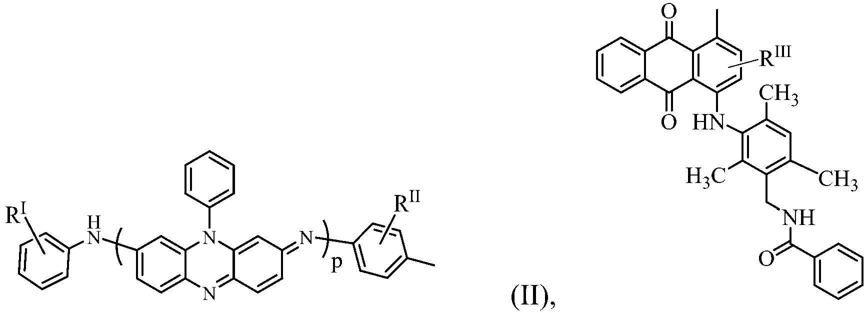 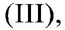 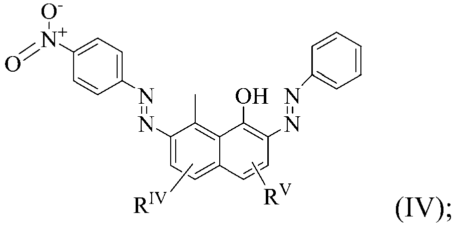 wherein R^{I}, R^{II}, R^{III}, R^{IV} and R^{V} are each independently hydrogen and/or a water soluble group, and p is an integer from 1 to 10.

8. The preparation method according to claim 7, wherein the water soluble group is -(CR^{VI}R^{VII})_{m'}-SO₃M, R^{VI} and R^{VII} are each independently selected from at least one of hydrogen and C₁-C₅ alkyl, M is monovalent metal ion and/or ammonium ion, and m' is an integer from 0 to 4.

9. The preparation method according to claim 6, wherein the dye chromogenic groups are unsubstituted or substituted anthraquinone groups represented by formula (V),

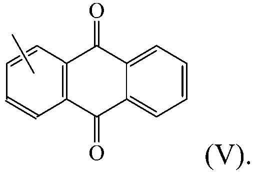

10. The preparation method according to claim 5, wherein the condensate containing the dye chromogenic groups comprises two terminal amino groups or two terminal carboxyl groups and has a structure unit a represented by formula(VI), 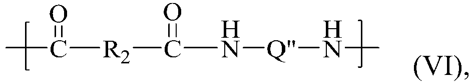 wherein R₂ is aliphatic alkylidene or aromatic alkylidene, and Q" is the dye chromogenic group.

11. The preparation method according to claim 10, wherein the dye chromogenic group is unsubstituted or substituted group represented by formula(VII), or unsubstituted or substituted group represented by formula(VIII),

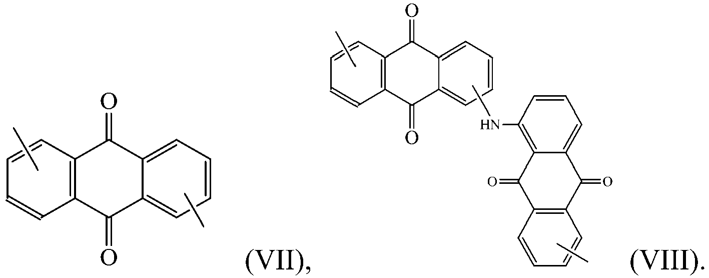

12. The preparation method according to any one of claims 5-11, wherein the preparation process of the condensate containing said dye chromogenic groups comprises: subjecting the dye monomer containing the dye chromogenic groups and a dibasic acid to the reaction I, and removing the unreacted dye monomer containing the dye chromogenic groups and/or the unreacted dibasic acid.

13. The preparation method according to claim 12, wherein the dibasic acid is aliphatic C₂-C₁₆ dibasic acid and/or aromatic C₈-C₁₄ dibasic acid, preferably at least one selected from the group consisting of oxalic acid, malonic acid, succinic acid, glutaric acid, adipic acid, pimelic acid, suberic acid, azelaic acid, sebacic acid, undecanedioic acid, dodecanedioic acid, tridecanedioic acid, tetradecanedioic acid, pentadecanedioic acid, hexadecanedioic acid, terephthalic acid, phthalic acid, isophthalic acid, 1,3-naphthalic acid, 1,4-naphthalic acid, 1,5-naphthalic acid, 1,7-naphthalic acid, 2,6-naphthalic acid and 2,7-naphthalic acid.

14. The preparation method according to claim 12, wherein the molar ratio of said dye monomer to said dibasic acid is 1: (0.01-100), more preferably 1: (2-50).

15. The preparation method according to claim 12, wherein the process of reaction I comprises: mixing the dye monomer with the dibasic acid to sequentially carry out a first-stage reaction I and a second-stage reaction I under an anaerobic condition;
preferably, the conditions of the first stage reaction I at least include: the temperature is within the range of 200-250°C, the pressure is within the range of 0.08-0.12MPa, and the time is 3-5h;
the conditions of the second stage reaction I at least include: the temperature is within the range of 200-250°C, the pressure is from -0.03MPa to -0.06MPa, and the time is 2-10h.

16. The preparation method according to claim 12, wherein the process of reaction I comprises: subjecting the dye monomer and the dibasic acid to the mixing reaction I to obtain a condensation salt, and sequentially carrying out a first-stage reaction II and a second-stage reaction II under an anaerobic condition;
preferably, the conditions of the mixing reaction I at least include: the temperature is within the range of 50-70°C, the pressure is within the range of 0.08-0.12MPa, and the time is 1-5h;
the conditions of the first stage reaction II at least include: the temperature is within the range of 200-250°C, the pressure is within the range of 0.08-0.12MPa, and the time is 1-5h;
the conditions of the second stage reaction II at least include: the temperature is within the range of 200-250°C, the pressure is from -0.04MPa to -0.09MPa, and the time is 2-8h.

17. The preparation method according to any one of claims 5-11, wherein the weight ratio of the condensate containing said dye chromogenic groups to the nylon monomer is 1: (50-3,000), preferably 1: (50-1,500).

18. The preparation method according to any one of claims 5-11, wherein the nylon monomer is lactam, preferably C₂-C₂₀ lactam, more preferably at least one selected from the group consisting of caprolactam, undecalactam and dodecalactam;
the condensation reaction is performed in the presence of an auxiliary agent, wherein the auxiliary agent is an organic monoacid, preferably an aliphatic monoacid and/or an aromatic monoacid, more preferably an aromatic monoacid, further preferably benzoic acid.

19. The preparation method according to any one of claims 5-11, wherein the nylon monomer is an aliphatic nylon salt, preferably at least one selected from the group consisting of nylon 66 salt, nylon 610 salt, nylon 612 salt, nylon 56 salt, nylon 512 salt, nylon 1212 salt, nylon 1313 salt, nylon 1012 salt and nylon 1010 salt;
the condensation reaction is carried out in the presence of an auxiliary agent, wherein the auxiliary agent is an organic dibasic acid, preferably an aliphatic dibasic acid and/or an aromatic dibasic acid, more preferably an aliphatic dibasic acid, and further preferably C₄-C₈ dibasic acid.

20. The preparation method according to any one of claims 5-11, wherein the method further comprises: cooling and processing the condensation reaction product.

21. The colored nylon produced with the preparation method according to any one of claims 5-20.

22. An application of the colored nylon according to any one of claims 1-4 and 21 in at least one of textile, industrial fibres and engineering materials.
